(19) Europäisches Patentamt / European Patent Office / Office européen des brevets

(11) **EP 4 236 322 B1**

(12) **EUROPEAN PATENT SPECIFICATION**

(45) Date of publication and mention
of the grant of the patent:
**16.07.2025 Bulletin 2025/29**

(51) International Patent Classification (IPC):
***H04N 19/597*** (2014.01)    ***G06T 9/00*** (2006.01)
***H04N 19/91*** (2014.01)

(21) Application number: **22749247.7**

(52) Cooperative Patent Classification (CPC):
**H04N 19/91; G06T 9/001; G06T 9/004;
H04N 19/597**

(22) Date of filing: **07.02.2022**

(86) International application number:
**PCT/CN2022/075410**

(87) International publication number:
**WO 2022/166968 (11.08.2022 Gazette 2022/32)**

(54) **POINT CLOUD ENCODING/DECODING METHOD AND DEVICE BASED ON TWO-DIMENSIONAL REGULARIZED PLANE PROJECTION**

VERFAHREN UND VORRICHTUNG ZUR CODIERUNG/DECODIERUNG EINER PUNKTWOLKE AUF BASIS EINER ZWEIDIMENSIONALEN PROJEKTION MIT GEREGELTER EBENE

PROCÉDÉ ET DISPOSITIF DE CODAGE/DÉCODAGE DE NUAGE DE POINTS BASÉS SUR UNE PROJECTION PLANE RÉGULARISÉE BIDIMENSIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2021   CN 202110171969**

(43) Date of publication of application:
**30.08.2023   Bulletin 2023/35**

(73) Proprietor: **Honor Device Co., Ltd.
Shenzhen, Guangdong 518040 (CN)**

(72) Inventors:
• **YANG, Fuzheng**
Xi'an, Shaanxi 710071 (CN)
• **ZHANG, Wei**
Xi'an, Shaanxi 710071 (CN)
• **CHEN, Tian**
Xi'an, Shaanxi 710071 (CN)
• **DU, Yuxin**
Xi'an, Shaanxi 710071 (CN)
• **SUN, Zexing**
Xi'an, Shaanxi 710071 (CN)
• **YU, Youguang**
Xi'an, Shaanxi 710071 (CN)
• **ZHANG, Ke**
Xi'an, Shaanxi 710071 (CN)
• **SONG, Jiarun**
Xi'an, Shaanxi 710071 (CN)

(74) Representative: **Beder, Jens
Mitscherlich PartmbB
Patent- und Rechtsanwälte
Karlstraße 7
80333 München (DE)**

(56) References cited:
WO-A1-2020/050577    WO-A1-2020/190097
CN-A- 111 726 615    CN-B- 110 708 529
US-A1- 2019 311 500    US-A1- 2021 006 806

• XU YINGZHAN ET AL: "Dynamic Point Cloud Geometry Compression via Patch-wise Polynomial Fitting", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 2287 - 2291, XP033564993, DOI: 10.1109/ICASSP.2019.8682413

- YE Y ET AL: "Algorithm descriptions of projection format conversion and video quality metrics in 360Lib", 5. JVET MEETING; 12-1-2017 - 20-1-2017; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-E1003, 11 February 2017 (2017-02-11), XP030150650
- KHALED MAMMOU (APPLE) ET AL: "[G-PCC] [New proposal] Optimization of the predictive coding scheme for Spinning Lidars", no. m53618, 15 April 2020 (2020-04-15), XP030287264, Retrieved from the Internet <URL:http://phenix.int-evry.fr/mpeg/doc_end_user/documents/130_Alpbach/wg11/m53618-v1-m53618.zip [G-PCC][New proposal] Optimization of the predictive coding scheme for Spinning Lidars.docx> [retrieved on 20200415]
- "Draft Status on addresing the V-PCC and G-PCC requirements", no. n19376, 19 June 2020 (2020-06-19), XP030289588, Retrieved from the Internet <URL:http://phenix.int-evry.fr/mpeg/doc_end_user/documents/130_Alpbach/wg11/w19376.zip w19376.docx> [retrieved on 20200619]

# Description

## TECHNICAL FIELD

The present invention pertains to the field of codec technologies, and specifically, to a point cloud encoding/decoding method apparatus based on two-dimensional regularized plane projection.

## BACKGROUND

With the improvement of hardware processing capabilities and the rapid development of computer vision, three-dimensional point clouds have been a new generation of immersive multimedia following audio, image, and video, and are widely used in virtual reality, augmented reality, autonomous driving, environmental modeling, and the like. However, a three-dimensional point cloud generally has a large amount of data, which hinders transmission and storage of point cloud data. Therefore, research on an efficient point cloud encoding and decoding technology is of great significance.

In an existing geometry-based point cloud compression coding (G-PCC, Geometry-based Point Cloud Compression) framework, geometric information and attribute information of a point cloud are encoded separately. At present, geometric codec of G-PCC can be classified into octree-based geometric codec and prediction tree-based geometric codec.

For octree-based geometric codec: geometric information of a point cloud is first preprocessed at the encoding end. This involves coordinate conversion and voxelization of the point cloud. Then, tree division (octree/quadtree/binary tree) is performed constantly in order of breadth-first search on a bounding box where the point cloud is located. Finally, a placeholder code of each node is encoded and the number of points contained in each leaf node is encoded to generate a binary bit stream. At the decoding end, constant parsing is first performed in order of breadth-first search to obtain the placeholder code of each node. Then, tree division is performed constantly and sequentially until a unit cube of 1x1x1 is obtained. Finally, the number of points contained in each leaf node is obtained by parsing, and reconstructed geometric information of the point cloud is obtained.

For prediction tree-based geometric codec: sorting is performed on an input point cloud at the encoding end. Then, a prediction tree structure is established. Each point is classified to a laser scanner it belongs to, and the prediction tree structure is established based on different laser scanners. Next, each node in the prediction tree is traversed. Different prediction modes are selected to predict geometric information of a node to obtain a prediction residual, and a quantization parameter is used to quantify the prediction residual. Finally, the prediction tree structure, the quantization parameter, the prediction residual of the geometry information of the node, and the like are encoded to generate a binary bit stream. At the decoding end, the bit stream is parsed, and the prediction tree structure is reconstructed. Then, the prediction residual is dequantized using geometric information prediction residual of each node obtained by parsing and the quantization parameter. Finally, reconstructed geometric information of each node is retrieved. In this way, the geometric information of the point cloud is reconstructed.

However, a point cloud has a high spatial sparsity. Therefore, for a point cloud encoding technology using an octree structure, empty nodes obtained by division takes up a high proportion, and spatial correlation of the point cloud cannot be fully reflected. This hinders prediction and entropy coding of the point cloud. For the point cloud codec technology based on the prediction tree, some parameters of a laser radar device are used to establish a tree structure. On this basis, the tree structure is used for predictive coding, but this tree structure does not fully reflect the spatial correlation of a point cloud and therefore hinders prediction and entropy coding of the point cloud. As a result, both the foregoing two point cloud codec technologies have a problem of low encoding efficiency.

CN 110 708 529 B and XU YINGZHAN ET AL: "Dynamic Point Cloud Geometry Compression via Patch-wise Polynomial Fitting", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 2287-2291 disclose similar methods for polynomial fitting and point cloud compression. In particular, polynomial fitting can be used to predict a depth of point cloud data and it can be used to replace the geometric information with fitting parameters and fitting differences.

## SUMMARY

To solve the foregoing problem in the prior art, the present invention provides a point cloud encoding/-decoding method and apparatus based on two-dimensional regularized plane projection, as defined in the independent claims.

## BRIEF DESCRIPTION OF DRAWINGS

FIG. 1 is a schematic diagram of a point cloud encoding method based on two-dimensional regularized plane projection according to an embodiment of the present invention;
FIG. 2 is a schematic diagram of a mapping between cylindrical coordinates of a point and a pixel in a two-dimensional projection plane according to an embodiment of the present invention;
FIG. 3 is a schematic diagram of a two-dimensional projection plane structure of a point cloud according to an embodiment of the present invention;

FIG. 4 is a block diagram of encoding a coordinate conversion error information graph according to an embodiment of the present invention;

FIG. 5 is a schematic diagram of predicting a coordinate conversion error according to an embodiment of the present invention;

FIG. 6 is a flowchart of entropy coding of a prediction residual of a coordinate conversion error according to an embodiment of the present invention;

FIG. 7 is a schematic structural diagram of a point cloud encoding apparatus based on two-dimensional regularized plane projection according to an embodiment of the present invention;

FIG. 8 is a schematic diagram of a point cloud decoding method based on two-dimensional regularized plane projection according to an embodiment of the present invention;

FIG. 9 is a block diagram of decoding a coordinate conversion error information graph according to an embodiment of the present invention; and

FIG. 10 is a schematic structural diagram of a point cloud decoding apparatus based on two-dimensional regularized plane projection according to an embodiment of the present invention.

DESCRIPTION OF EMBODIMENTS

The following further describes the present invention in detail with reference to specific embodiments, but the embodiments of the present invention are not limited hereto.

Embodiment 1

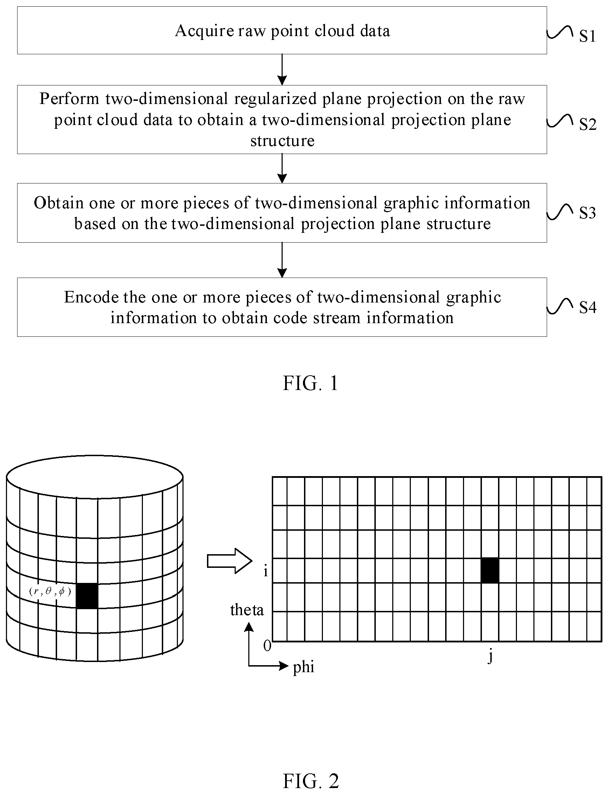

Refer to FIG. 1. FIG. 1 is a schematic diagram of a point cloud encoding method based on two-dimensional regularized plane projection according to an embodiment of the present invention. The method includes the following steps.

S1. Acquire raw point cloud data.

Specifically, the raw point cloud data generally includes a set of three-dimensional spatial points, and each spatial point records its own geometric position information, as well as additional attribute information such as color, reflectivity, and normal line. The geometric position information of a point cloud is generally represented using the Cartesian coordinate system, namely, X, Y, and Z coordinates of points. The raw point cloud data may be obtained by using a 3D scanning device such as a laser radar, and may also be obtained from common datasets provided by various platforms. In this embodiment, the geometric position information of the acquired raw point cloud data is represented based on the Cartesian coordinate system. It should be noted that a representation method of the geometric position information of the raw point cloud data is not limited to Cartesian coordinates.

S2. Perform two-dimensional regularized plane projection on the raw point cloud data to obtain a two-dimensional projection plane structure.

Specifically, in this embodiment, before two-dimensional regularized plane projection is performed on a raw point cloud, preprocessing may also be performed on the raw point cloud data, for example, voxelization processing, to facilitate subsequent encoding.

First, the two-dimensional projection plane structure is initialized.

Regularization parameters need to be used in initializing the two-dimensional regularized projection plane structure of a point cloud. Generally, the regularization parameters are finely measured by the manufacturer and provided for consumers as one of necessary data, for example, an acquisition range of a laser radar, sampled angular resolution $\Delta\varphi$ or number of sampled points for horizontal azimuth, as well as a distance correction factor of each laser scanner, information on offsets of a laser scanner along the vertical and horizontal directions $V_o$ and $H_o$, and information on offsets of a laser scanner along the pitch angle and horizontal azimuth angle $\theta_0$ and $\alpha$.

It should be noted that the regularization parameters are not limited to the above-mentioned parameters, which may be given calibration parameters of the laser radar, or may be obtained by such means as estimation optimization and data fitting if the calibration parameters of the laser radar are not given.

The two-dimensional regularized projection plane structure of a point cloud is a data structure containing M rows and N columns of pixels. After projection, points in a three-dimensional point cloud correspond to pixels in the data structure. In addition, a pixel ($i,j$) in the data structure can be associated with a cylindrical co-ordinate component ($\theta,\phi$). For example, a pixel ($i,j$) corresponding to cylindrical coordinates ($r,\theta,\phi$) can be found using the following formula:

$$i = \min_{1,2\ldots LaserNum} \left|\theta - \theta_0\right|,$$

$$j = (\phi + 180^\circ) / \Delta\varphi.$$

Specifically, refer to FIG. 2. FIG. 2 is a schematic diagram of a mapping between cylindrical coordinates of a point and a pixel in a two-dimensional projection plane according to an embodiment of the present invention.

It should be noted that such a mapping is not limited to the mapping between pixels and cylindrical coordinates.

Further, resolution of the two-dimensional regularized projection plane may be obtained from the regularization parameters. For example, if the resolution of the two-dimensional regularized projection plane is $M \times N$, the number of laser scanners in the regularization parameters can be used to initialize M, and the sampled angular resolution for horizontal azimuth $\Delta\varphi$ (or the number of sampled points of the laser scanner) is used to initialize N. For example, the following formula can be used to eventually initialize the two-dimensional projection plane structure and obtain a plane structure containing M × N pixels.

$$M = laserNum;$$

$$N = \frac{360°}{\Delta\varphi} \quad \text{or} \quad N = pointNumPerLaser.$$

Second, the mapping between the raw point cloud data and the two-dimensional projection plane structure is determined, so as to project the raw point cloud data onto the two-dimensional projection plane structure.

In this part, a position of the raw point cloud in the two-dimensional projection plane structure is determined point by point, so as to map originally discretely distributed point clouds in the Cartesian coordinate system to the uniformly distributed two-dimensional regularized projection plane structure. Specifically, a corresponding pixel is determined in the two-dimensional projection plane structure for each point in the raw point cloud. For example, a pixel with the smallest spatial distance from the projected position of a point in the two-dimensional plane can be selected as a corresponding pixel of the point.

If two-dimensional projection is performed in the cylindrical coordinate system, a specific process of determining pixels corresponding to a raw point cloud is as follows.

    a. Determine a cylindrical coordinate component $r$ of a current point in the raw point cloud data. Specifically, calculation is performed using the following formula:

$$r = \sqrt{x^2 + y^2}.$$

    b. Determine a search area for the current point in the two-dimensional projection plane structure. Specifically, the entire two-dimensional projection plane structure may be directly selected as the search area. Further, to reduce the amount of computation, the search area for the corresponding pixel in the two-dimensional projection plane structure may also be determined based on cylindrical coordinate components of a pitch angle $\theta$ and an azimuth angle $\phi$ of the current point, so as to reduce the search area.

    c. After the search area is determined, for each pixel $(i,j)$ therein, calculate a position $(xl,yl,zl)$ of a current pixel in the Cartesian coordinate system by using the regularization parameters, namely, calibration parameters of the $i$-th laser scanner of the laser radar $\theta_0$, $V_o$, $H_o$, and $\alpha$. The specific calculation formulas are as follows:

$$\theta_i = \theta_0$$

$$\phi_j = -180° + j \times \Delta\varphi$$

$$xl = r \cdot \sin(\phi_j - \alpha) - H_o \cdot \cos(\phi_j - \alpha)$$

$$yl = r \cdot \cos(\phi_j - \alpha) + H_o \cdot \sin(\phi_j - \alpha)$$

$$zl = r \cdot \tan\theta_i + V_o$$

    d. After the position $(xl,yl,zl)$ of the current pixel in the Cartesian coordinate system is obtained, calculate a spatial distance between the current pixel and the current point $(x,y,z)$ and use it as an error Err, namely:

$$Err = dist\{(x,y,z),(xl,yl,zl)\}$$

If the error Err is smaller than a current minimum error minErr, the error Err is used to update the minimum error minErr, and $i$ and $j$ corresponding to the current pixel are used to update $i$ and $j$ of a pixel corresponding to the current point. If the error Err is greater than the minimum error minErr, the foregoing update process is not performed.

    e. When all pixels in the search area are traversed, the corresponding pixel $(i,j)$ of the current point in the two-dimensional projection plane structure can be determined.

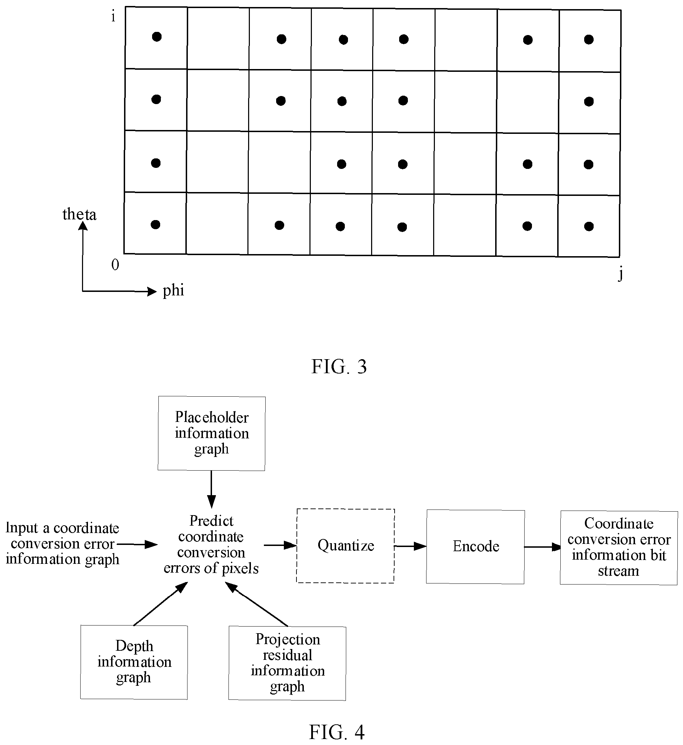

When the foregoing operations are completed on all points in the raw point cloud, the two-dimensional regularized plane projection of the point cloud is completed. Specifically, refer to FIG. 3. FIG. 3 is a schematic diagram of a two-dimensional projection plane structure of a point cloud according to an embodiment of the present invention, where each point in the raw point cloud data is mapped to a corresponding pixel in this structure.

It should be noted that during the two-dimensional regularized plane projection of a point cloud, a plurality of points in the point cloud may correspond to a same pixel in the two-dimensional projection plane structure. To avoid this situation, these spatial points can be projected to different pixels during projection. For example, during projection of a specified point, if its corresponding pixel already corresponds to a point, the specified point is projected to an empty pixel adjacent to the pixel. In addition, if a plurality of points in a point cloud have been projected to a same pixel in the two-dimensional projection plane structure, during encoding based on the two-dimensional projection plane structure, the number of corresponding points in each pixel should also be encoded and information on each of the corresponding points in the pixel should be encoded based on the number of corresponding points.

S3. Obtain one or more pieces of two-dimensional graphic information based on the two-dimensional projection plane structure.

In this embodiment, the one or more pieces of two-dimensional graphic information includes a coordinate conversion error information graph.

Specifically, the coordinate conversion error information graph is used to represent a residual between a spatial position obtained by back projection of each occupied pixel in the two-dimensional regularized projection plane structure and a spatial position of a raw point corresponding to the pixel.

For example, the following method can be used to calculate a coordinate conversion error of a pixel. Assuming that the current pixel is $(i,j)$ and Cartesian coordinates of its corresponding point is $(x,y, z)$, regularization parameters and the following formula can be used to convert the pixel back to the Cartesian coordinate system and obtain the corresponding Cartesian coordinates $(xl, yl, zl)$.

$$\theta_i = \theta_0$$

$$\phi_j = -180° + j \times \Delta\varphi$$

$$r = \sqrt{x^2 + y^2}$$

$$xl = r \cdot \sin(\phi_j - \alpha) - H_o \cdot \cos(\phi_j - \alpha)$$

$$yl = r \cdot \cos(\phi_j - \alpha) + H_o \cdot \sin(\phi_j - \alpha)$$

$$zl = r \cdot \tan\theta_i + V_o$$

Next, the coordinate conversion error ($\Delta x, \Delta y, \Delta z$) of the current pixel can be calculated using the following formula:

$$\Delta x = x - xl$$

$$\Delta y = y - yl$$

$$\Delta z = z - zl$$

According to the foregoing calculations, each occupied pixel in the two-dimensional regularized projection plane structure has a coordinate conversion error, and therefore a coordinate conversion error information graph corresponding to the point cloud is obtained.

S4. Encode the one or more pieces of two-dimensional graphic information to obtain bit stream information.

Accordingly, the encoding the one or more pieces of two-dimensional graphic information to obtain bit stream information includes: encoding the coordinate conversion error information graph to obtain a coordinate conversion error information bit stream. Specifically, the coordinate conversion error information graph needs to be predicted to obtain a prediction residual of the coordinate conversion error information, and then the prediction residual is encoded.

In this embodiment, pixels in the coordinate conversion error information graph is predicted based on a placeholder information graph, a depth information graph, a projection residual information graph, and reconstructed coordinate conversion error information of encoded and decoded pixels to obtain a prediction residual.

The placeholder information graph is used to identify whether a pixel in the two-dimensional regularized projection plane structure is occupied, that is, whether each pixel corresponds to a point in the point cloud. If occupied, the pixel is non-empty; otherwise, the pixel is empty. Therefore, the placeholder information graph can be obtained based on the two-dimensional projection plane structure of the point cloud.

The depth information graph is used to represent distance between the corresponding point of each occupied pixel in the two-dimensional regularized projection plane structure and the coordinate origin. For example, the cylindrical coordinate component $r$ of the corresponding point of the pixel can be used as depth of the pixel. Based on this, each occupied pixel in the two-dimensional regularized projection plane structure has a depth value, and therefore the depth information graph is obtained.

The projection residual information graph is used to represent a residual between a corresponding position and an actual projection position of each occupied pixel in the two-dimensional regularized projection plane structure. Based on this, each occupied pixel in the two-dimensional regularized projection plane structure has a projection residual, and therefore the projection residual information graph is obtained.

The placeholder information graph, the depth information graph, and the projection residual information graph can all be directly obtained from the two-dimensional regularized projection plane structure.

Refer to FIG. 4. FIG. 4 is a block diagram of encoding a coordinate conversion error information graph according to an embodiment of the present invention, which specifically includes the following.

41) Predict the coordinate conversion error of a pixel.

In this embodiment, the coordinate conversion error of the current pixel can be predicted based on the placeholder information graph, the depth information graph, the projection residual information graph, and the reconstructed coordinate conversion error information of encoded and decoded pixels. Details are as follows.

41a) Traverse each pixel in the coordinate conversion error information graph according to a specified scanning order, and identify encoded and decoded non-empty pixels in an area adjacent to a current non-empty pixel based on the placeholder information graph.

For example, in this embodiment, each pixel in the coordinate conversion error information graph may be traversed by using a Z-scan method.

41b) Establish a relationship between depth information and reconstructed coordinate conversion error information by using the encoded and decoded non-empty pixels, and establish a relationship between projection residual information and the reconstructed coordinate conversion error information by using the encoded and decoded non-empty pixels.

For example, a simple relationship can be established to select a reference pixel, from the encoded and decoded non-empty pixels in the adjacent area of the current non-empty pixel, which is close to the current pixel in terms of depth information and projection residual information.

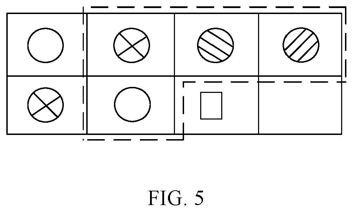

Specifically, refer to FIG. 5. FIG. 5 is a schematic diagram of predicting a coordinate conversion error according to an embodiment of the present invention. ☆ represents the current pixel, ○ represents the reference pixel in the adjacent area, ⬠ represents an adjacent-area pixel that differs greatly from the current pixel in the depth information, ⬡ represents an adjacent-area pixel that differs greatly from the current pixel in the projection residual information, and ⊗ represents an empty pixel that has been encoded and decoded and not been occupied.

During prediction of the coordinate conversion error of the current pixel, the placeholder information graph is used to determine occupancy status of encoded and decoded pixels in an area adjacent to the current pixel, that is, within the dashed-line box, non-empty pixels in the area are identified, and then these encoded and decoded non-empty pixels are used to simply establish a relationship between the depth information and a reconstructed coordinate conversion error. In accordance with the claimed invention, the following relationship is established: if two pixels have similar depth information, their coordinate conversion errors are similar. Likewise, these encoded and decoded non-empty pixels are also used to simply establish a relationship between the projection residual information and the reconstructed coordinate conversion error. In accordance with the claimed invention, the following relationship is established: if two pixels have similar projection residual, their coordinate conversion errors are similar. In this case, pixels that are similar to the current pixel in terms of the depth information and the projection residual information can be selected, from these encoded and decoded non-empty pixels, as the reference pixels, and an average of reconstructed coordinate conversion error information of these reference pixels is calculated and used as a predicted value ($\Delta x\_pred,$ $\Delta y\_pred,$ $\Delta z\_pred$) of the coordinate conversion error information of the current pixel. The specific calculation formulas are as follows:

$$\Delta x\_pred = \sum_{i=1}^{N} \Delta x_i \big/ N$$

$$\Delta y\_pred = \sum_{i=1}^{N} \Delta y_i \big/ N$$

$$\Delta z\_pred = \sum_{i=1}^{N} \Delta z_i \big/ N$$

$(\Delta x_i, \Delta y_i, \Delta z_i), i = 1, 2...N$ are the reconstructed coordinate conversion errors of the adjacent reference pixels of the current pixel, and N is the number of the reference pixels in the adjacent area. After the predicted value of the coordinate conversion error of the current pixel is obtained, a difference between an original coordinate conversion error and the predicted coordinate conversion error of the current pixel is calculated, that is, obtaining a prediction residual of the coordinate conversion error of the current pixel.

In this embodiment, coordinate conversion errors of pixels in the coordinate conversion error information graph may also be predicted based on part of information graphs among the placeholder information graph, the depth information graph, and the projection residual information graph to obtain a prediction residual of a coordinate conversion error. The detailed process is not described herein.

In the present invention, during encoding of the coordinate conversion error information, prediction is performed on the coordinate conversion error information graph by using the placeholder information graph, the depth information graph, and the projection residual information graph. This improves the encoding efficiency.

In another embodiment of the present invention, a conventional encoding method may be used: predicting the coordinate conversion error of the pixels in the coordinate conversion error information graph directly based on reconstructed coordinate conversion error information of encoded and decoded pixels to obtain the prediction residual.

In addition, a rate-distortion optimization model may also be used to select an optimal prediction mode from a number of preset prediction modes for predicting the coordinate conversion errors of the pixels in the coordinate conversion error information graph, to obtain the prediction residual.

For example, the following six prediction modes may be set.

> Mode 0: direct mode, performing direct compression without prediction;
> Mode 1: leftward prediction, using non-empty pixels on the left side as the reference pixels;
> Mode 2: upward prediction, using non-empty pixels on the upward side as the reference pixels;
> Mode 3: upper-left prediction, using non-empty pixels on the upper left side as the reference pixels;
> Mode 4: upper-right prediction, using non-empty pixels on the upper right side as the reference pixels; and
> Mode 5: using non-empty pixels on the left side, upward side, upper left side, and upper right side as the reference pixels.

The rate-distortion optimization model is used to select an optimal mode for prediction to obtain the prediction residual.

42) Encode the prediction residual to obtain the coordinate conversion error information bit stream.

After the coordinate conversion error information is predicted, the prediction residual needs to be encoded. It should be noted that lossy encoding of the coordinate conversion information graph requires the prediction residual of the coordinate conversion error information to be quantized before being encoded. Lossless encoding of the coordinate conversion information graph does not require quantization of the prediction residual.

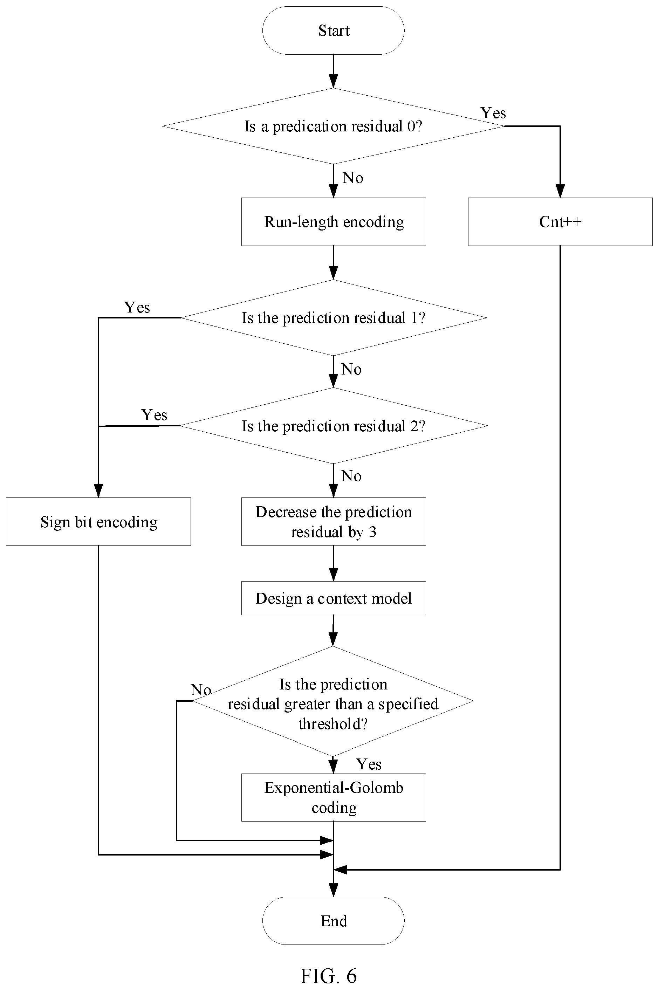

Specifically, in this embodiment, a context-based entropy coding method is used for implementation. For example, the entropy coding process illustrated in FIG. 6 can be used to encode the prediction residual, where Cnt represents the number of consecutive prediction residual components that are zero. The detailed encoding process is as follows:

> a. First determine whether the prediction residual of the coordinate conversion error of the current pixel is 0. If it is 0, Cnt is increased by 1 and no encoding is performed subsequently.
> b. Otherwise, encode Cnt and determine whether the prediction residual of the coordinate conversion error of the current pixel is 1. If it is 1, the identifier 1 is encoded and no encoding is performed subsequently.
> c. Otherwise, determine whether the prediction residual of the coordinate conversion error of the current pixel is 2. If it is 2, the identifier 2 is encoded and no encoding is performed subsequently.
> d. Otherwise, decrease the prediction residual of the coordinate conversion error of the current pixel by 3 and determine whether the prediction residual is greater than a specified threshold. If it is smaller than the specified threshold, a context model is designed for the prediction residual; otherwise, encoding is performed in the following manner:

> designing a context for encoding prediction residual information smaller than the threshold; and
> performing exponential-Golomb coding on prediction residual information greater than the threshold.

In addition, in another embodiment of the present invention, the coordinate conversion error information graph may also be encoded by image\video compression. The applicable encoding schemes herein include but are not limited to JPEG, JPEG2000, HEIF, H.264\AVC, and H.265\HEVC.

In another embodiment of the present invention, encoding may be performed on other information graphs obtained based on the two-dimensional projection plane structure, such as the placeholder information graph, the depth information graph, the projection residual information graph, and an attribute information graph, to obtain corresponding bit stream information.

In the present invention, a point cloud in a three-dimension space is projected into a corresponding two-dimensional regularized projection plane structure, and the point cloud is corrected through regularization in a vertical direction and a horizontal direction. In this way, a strong correlation representation of the point cloud on the two-dimensional projection plane structure is obtained. This avoids sparsity in a three-dimensional representation structure and highlights spatial correlation of the point cloud. During subsequent encoding of a coordinate conversion error information graph obtained from the two-dimensional regularized projection plane structure, the spatial correlation of the point cloud can be fully utilized to reduce spatial redundancy. This further improves the encoding efficiency of the point cloud.

Embodiment 2

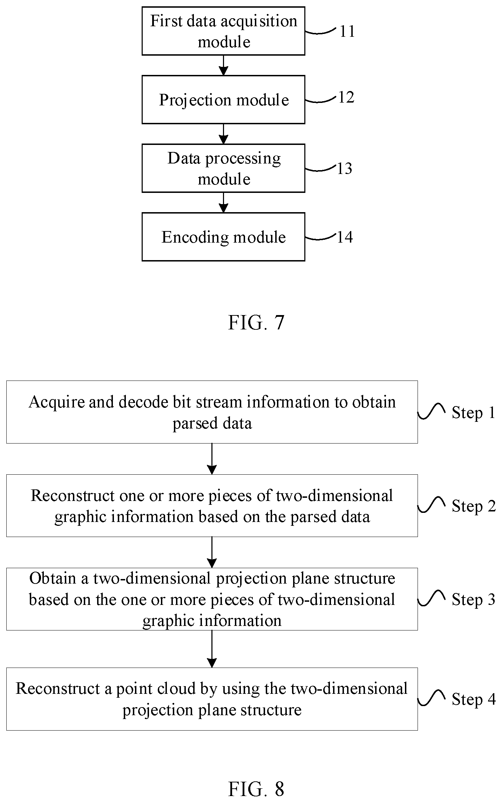

On the basis of embodiment 1, this embodiment provides a point cloud encoding apparatus based on two-dimensional regularized plane projection. Refer to FIG. 7. FIG. 7 is a schematic structural diagram of a point cloud encoding apparatus based on two-dimensional regularized plane projection according to an embodiment of the present invention. The apparatus includes:

> a first data acquisition module 11, configured to acquire raw point cloud data;

a projection module 12, configured to perform two-dimensional regularized plane projection on the raw point cloud data to obtain a two-dimensional projection plane structure;

a data processing module 13, configured to obtain one or more pieces of two-dimensional graphic information based on the two-dimensional projection plane structure; and

an encoding module 14, configured to encode the one or more pieces of two-dimensional graphic information to obtain bit stream information.

The encoding apparatus provided in this embodiment can implement the encoding method described in embodiment 1. The detailed process is not described herein again.

Embodiment 3

Refer to FIG. 8. FIG. 8 is a schematic diagram of a point cloud decoding method based on two-dimensional regularized plane projection according to an embodiment of the present invention. The method includes the following steps.

S1. Acquire and decode bit stream information to obtain parsed data.

A decoding end acquires compressed bit stream information, and uses a corresponding existing entropy decoding technology to decode the bit stream information accordingly to obtain the parsed data.

The detailed decoding process is as follows:

a. Parse whether Cnt is greater than or equal to 1. If Cnt is greater than or equal to 1, a prediction residual of a current pixel is 0, and no decoding is performed subsequently. Cnt represents the number of consecutive prediction residuals that are zero.

b. Otherwise, parse whether the prediction residual information of the coordinate conversion error of the current pixel is 1. If it is 1, the prediction residual of the current pixel is 1 and no decoding is performed subsequently.

c. Otherwise, parse whether the prediction residual information of the coordinate conversion error of the current pixel is 2. If it is 2, the prediction residual of the current pixel is 2 and no decoding is performed subsequently.

d. Otherwise, design a corresponding context model for the prediction residual of the coordinate conversion error of the current pixel for decoding, and then determine whether the prediction residual obtained by parsing is greater than a specified threshold. If it is smaller than the specified threshold, no decoding is performed subsequently; otherwise, exponential Golomb decoding is used to decode the prediction residual value greater than the threshold. Finally, the prediction residual value is increased by 3 and used as a final prediction residual of the coordinate conversion error information obtained by parsing.

It should be noted that if the encoding end has quantized the prediction residual of the coordinate conversion error information, the prediction residual obtained by parsing needs to be dequantized herein.

S2. Reconstruct one or more pieces of two-dimensional graphic information based on the parsed data.

In this embodiment, step 2 may include: reconstructing a coordinate conversion error information graph based on prediction residual of the coordinate conversion error information graph in the parsed data to obtain a reconstructed coordinate conversion error information graph.

Specifically, at the encoding end, the one or more pieces of two-dimensional graphic information may include the coordinate conversion error information graph, meaning that the coordinate conversion error information graph has been encoded. Correspondingly, bit stream information at the decoding end also includes a coordinate conversion error information bit stream. More specifically, the parsed data obtained by decoding the bit stream information includes the prediction residual of the coordinate conversion error information.

In embodiment 1, at the encoding end, the pixels in the coordinate conversion error information graph are traversed according to a specified scanning order and the coordinate conversion error information of the non-empty pixels therein is encoded. Therefore, the prediction residual of the coordinate conversion error information of the pixels obtained by the decoding end also follows this order, and the decoding end can obtain resolution of the coordinate conversion error information graph by using regularization parameters. For details, refer to S2 of embodiment 1, in which the two-dimensional projection plane structure is initialized. Therefore, the decoding end can obtain a position of a current to-be-reconstructed pixel in the two-dimensional graph based on the resolution of the coordinate conversion error information graph and the placeholder information graph.

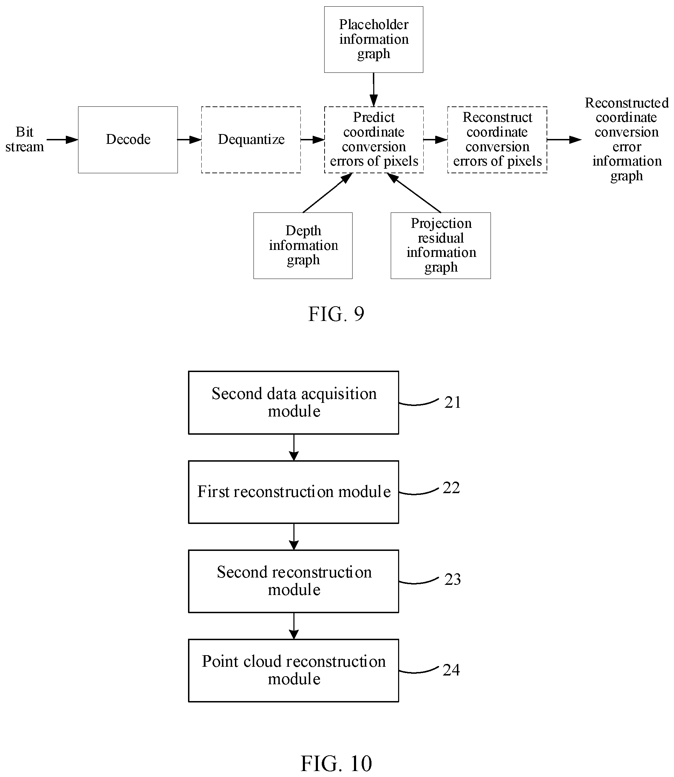

Specifically, refer to FIG. 9. FIG. 9 is a block diagram of decoding a coordinate conversion error information graph according to an embodiment of the present invention. Coordinate conversion error information of the current to-be-reconstructed pixel is predicted based on the placeholder information graph, a depth information graph, a projection residual information graph, and reconstructed coordinate conversion error information of encoded and decoded pixels. This is the same as the prediction method used at the encoding end. The placeholder information graph is used to determine occupancy status of encoded and decoded pixels in an area adjacent to the current to-be-reconstructed pixel, that is, within the dashed-line box, and then non-empty pixels in the area are identified. Next, the relationship, which is established by the encoding end, between the depth information and reconstructed coordinate conversion error information of these encoded and decoded non-empty pixels is used: if two pixels have similar depth information, their coordinate conversion errors are similar. In addition, the relationship, which is established by the encoding end, between the projection residual information and the reconstructed coordinate conversion error is also used: if two pixels have similar projection residual information, their coordinate conversion errors are similar. In this case, pixels that are similar to the current pixel in terms of depth information and projection residual information can be selected, from these encoded and decoded non-empty pixels, as the reference pixels, and an average of reconstructed coordinate conversion error information of these reference pixels is calculated and used as a predicted value of the coordinate conversion error information of the current pixel. Then, the coordinate conversion error information of the current pixel is reconstructed based on the predicted value obtained and the prediction residual obtained by parsing. When coordinate conversion errors of all pixels are reconstructed, a reconstructed coordinate conversion error information graph is obtained.

S3. Obtain a two-dimensional projection plane structure based on the two-dimensional graphic information.

Resolution of the two-dimensional projection plane structure is consistent with the coordinate conversion error information graph, and the coordinate conversion error information graph has been reconstructed. Therefore, the coordinate conversion error information of each non-empty pixel in the two-dimensional projection plane structure can be obtained, so that a reconstructed two-dimensional projection plane structure can be obtained.

S4. Reconstruct a point cloud by using the two-dimensional projection plane structure.

Pixels in the reconstructed two-dimensional projection plane structure are traversed according to a specified scanning order, so that the coordinate conversion error information of each non-empty pixel can be obtained. If the current pixel $(i,j)$ is non-empty and its coordinate conversion error is $(\Delta x, \Delta y, \Delta z)$, other information such as depth information is used to reconstruct a spatial point $(x,y,z)$ corresponding to the pixel. Specifically, a position corresponding to the current pixel $(i,j)$ may be represented as $(\phi_j, i)$. Regularization parameters and other information such as the depth information r can be used to reconstruct the spatial point $(x,y,z)$ corresponding to the current pixel. Specific calculations are as follows:

$$\phi_j = -180° + j \times \Delta\varphi$$

$$\theta_i = \theta_0$$

$$xl = r \cdot \sin(\phi_j - \alpha) - H_o \cdot \cos(\phi_j - \alpha)$$

$$yl = r \cdot \cos(\phi_j - \alpha) + H_o \cdot \sin(\phi_j - \alpha)$$

$$zl = r \cdot \tan\theta_i + V_o$$

$$(x, y, z) = (xl, yl, zl) + (\Delta x, \Delta y, \Delta z)$$

Finally, a corresponding spatial point can be reconstructed for each non-empty pixel in the two-dimensional projection structure based on the foregoing calculations, so as to obtain a reconstructed point cloud.

Embodiment 4

On a basis of the foregoing embodiment 3, this embodiment provides a point cloud decoding apparatus based on two-dimensional regularized plane projection. Refer to FIG. 10. FIG. 10 is a schematic structural diagram of a point cloud decoding apparatus based on two-dimensional regularized plane projection according to an embodiment of the present invention. The apparatus includes:

a second data acquisition module 21, configured to acquire and decode bit stream information to obtain parsed data;
a first reconstruction module 22, configured to reconstruct one or more pieces of two-dimensional graphic information based on the parsed data;
a second reconstruction module 23, configured to obtain a two-dimensional projection plane structure based on the one or more pieces of two-dimensional graphic information; and
a point cloud reconstruction module 24, configured to reconstruct a point cloud by using the two-dimensional projection plane structure.

The decoding apparatus provided in this embodiment can implement the decoding method described in embodiment 5. The detailed process is not described herein again.

The foregoing descriptions are further detailed descriptions of the present invention with reference to specific preferred embodiments, and it cannot be construed that the specific implementation of the present invention is merely limited to these descriptions. For those of ordinary skill in the technical field of the present invention, without departing from the concept of the present invention, some simple deductions or replacements can be further made and should fall within the protection scope of the present invention, which is defined by the appended claims.

## Claims

1. A point cloud encoding method based on two-dimensional regularized plane projection, comprising:

   acquiring (S1) raw point cloud data;
   performing (S2) two-dimensional regularized plane projection on the raw point cloud data to obtain a two-dimensional projection plane structure;
   obtaining (S3) one or more pieces of two-dimensional graphic information comprising a coordinate conversion error information graph representing a residual between a spatial position obtained by back projection of each non-empty pixel in the two-dimensional regularized projection plane structure and a spatial position of a raw point corresponding to the pixel, based on the two-dimensional projection plane structure; and
   encoding (S4) the one or more pieces of two-dimensional graphic information to obtain bit stream information, which comprises encoding the coordinate conversion error information graph to obtain a coordinate conversion error information bit stream; wherein the encoding the coordinate conversion error information graph to obtain a coordinate conversion error information bit stream comprises:

   predicting the coordinate conversion error of each pixel in the coordinate conversion error information graph based on a placeholder information graph identifying whether a respective pixel in the two-dimensional regularized projection plane structure is empty or non-empty, a depth information graph representing a distance between a corresponding point of each non-empty pixel in the two-dimensional regularized projection plane structure and a coordinate origin, and a projection residual information graph representing a residual between a position of a corresponding raw point and an actual projection position of each non-empty pixel in the two-dimensional regularized projection plane structure, to obtain a prediction residual of a coordinate conversion error; or
   predicting the coordinate conversion error of each pixel in the coordinate conversion error information graph based on reconstructed coordinate conversion error information of encoded and decoded pixels to obtain a prediction residual of a coordinate conversion error; and
   encoding the prediction residual of the coordinate conversion error to obtain the coordinate conversion error information bit stream; and wherein predicting the coordinate conversion error of each pixel in the coordinate conversion error information graph based on the placeholder information graph, the depth information graph, and the projection residual information graph to obtain the prediction residual of the coordinate conversion error comprises:

   traversing the pixels in the coordinate conversion error information graph according to a specified scanning order, and identifying encoded and decoded non-empty pixels in an area adjacent to a current non-empty pixel based on the placeholder information graph;
   determining a relationship concluding that two encoded and decoded non-empty pixels have similar coordinate conversion errors, if they have similar depth information; and determining a relationship concluding that two encoded and decoded non-empty pixels have similar coordinate conversion errors, if they have a similar projection residual, wherein the two encoded and decoded non-empty pixels having similar depth information and similar projection residual are selected as reference pixels;
   estimating coordinate conversion error information corresponding to a current pixel based on the relationship between depth information and coordinate conversion error information and the relationship between projection residual information and coordinate conversion error information, to obtain an estimated value of the coordinate conversion error of the current pixel; and
   using the estimated value as a predicted value of the coordinate conversion error of the current pixel to obtain a prediction residual of the coordinate conversion error of the current pixel;
   wherein an average of the reconstructed coordinate conversion error information of the reference pixels is calculated and used as the predicted value.

2. The point cloud encoding method according to claim 1, wherein the encoding the coordinate conversion error information graph to obtain the coordinate conversion error information bit stream further comprises:

predicting the coordinate conversion error of each pixel in the coordinate conversion error information graph based on part of information graphs among a placeholder information graph, a depth information graph, and a projection residual information graph to obtain a prediction residual of a coordinate conversion error; and encoding the prediction residual of the coordinate conversion error to obtain the coordinate conversion error information bit stream.

3. A point cloud encoding apparatus based on two-dimensional regularized plane projection, comprising:

a first data acquisition module (11), configured to acquire raw point cloud data;
a projection module (12), configured to perform two-dimensional regularized plane projection on the raw point cloud data to obtain a two-dimensional projection plane structure;
a data processing module (13), configured to obtain one or more pieces of two-dimensional graphic information comprising a coordinate conversion error information graph representing a residual between a spatial position obtained by back projection of each non-empty pixel in the two-dimensional regularized projection plane structure and a spatial position of a raw point corresponding to the pixel, based on the two-dimensional projection plane structure; and
an encoding module (14), configured to encode the one or more pieces of two-dimensional graphic information to obtain bit stream information, which comprises encoding the coordinate conversion error information graph to obtain a coordinate conversion error information bit stream, wherein the encode the coordinate conversion error information graph to obtain the coordinate conversion error information bit stream comprises:

predict pixels in the coordinate conversion error information graph based on a placeholder information graph identifying whether a respective pixel in the two-dimensional regularized projection plane structure is empty or non-empty, a depth information graph representing a distance between the corresponding point of each non-empty pixel in the two-dimensional regularized projection plane structure and a coordinate origin, and a projection residual information graph representing a residual between a position of the corresponding raw point and an actual projection position of each non-empty pixel in the two-dimensional regularized projection plane structure, to obtain a prediction residual of a coordinate conversion error; or
predict pixels in the coordinate conversion error information graph based on reconstructed coordinate conversion error information of encoded and decoded pixels to obtain a prediction residual of a coordinate conversion error; and
encode the prediction residual of the coordinate conversion error to obtain the coordinate conversion error information bit stream; wherein the predict pixels in the coordinate conversion error information graph based on the placeholder information graph, the depth information graph, and the projection residual information graph to obtain the prediction residual of a coordinate conversion error comprises:

traverse the pixels in the coordinate conversion error information graph according to a specified scanning order, and identify encoded and decoded non-empty pixels in an area adjacent to a current non-empty pixel based on the placeholder information graph;
determine a relationship concluding that two encoded and decoded non-empty pixels have similar coordinate conversion errors, if they have similar depth information; and determine a relationship concluding that two encoded and decoded non-empty pixels have similar coordinate conversion errors, if they have a similar projection residual, wherein the two encoded and decoded non-empty pixels having similar depth information and similar projection residual are selected as reference pixels;
estimate coordinate conversion error information corresponding to a current pixel based on the relationship between depth information and coordinate conversion error information and the relationship between projection residual information and coordinate conversion error information, to obtain an estimated value of the coordinate conversion error of the current pixel; and
use the estimated value as a predicted value of the coordinate conversion error of the current pixel to obtain a prediction residual of the coordinate conversion error of the current pixel;
wherein an average of the reconstructed coordinate conversion error information of the reference pixels is calculated and used as the predicted value.

4. The point cloud encoding apparatus according to claim 3, wherein the encode the coordinate conversion error information graph to obtain the coordinate conversion error information bit stream further comprises:

predict pixels in the coordinate conversion error information graph based on part of information graphs among a placeholder information graph, a depth information graph, and a projection residual information graph to obtain a prediction residual of a coordinate conversion error; and encode the prediction residual of the coordinate conversion error to obtain the coordinate conversion error information bit stream.

5. A point cloud decoding method based on two-dimensional regularized plane projection, comprising:

acquiring (Step 1) and decoding bit stream information to obtain parsed data; reconstructing (Step2) one or more pieces of two-dimensional graphic information based on the parsed data which comprises prediction residual of the coordinate conversion error information representing a residual between a spatial position obtained by back projection of each non-empty pixel in the two-dimensional regularized projection plane structure and a spatial position of a raw point corresponding to the pixel; obtaining (Step 3) a two-dimensional projection plane structure based on the one or more pieces of two-dimensional graphic information; and reconstructing (Step 4) a point cloud by using the two-dimensional projection plane structure, wherein the decoding bit stream information comprises using existing entropy decoding technology to decode the bit stream information, wherein the reconstructing (Step2) one or more pieces of two-dimensional graphic information based on the parsed data comprises: reconstructing a coordinate conversion error information graph based on a prediction residual of the coordinate conversion error information graph in the parsed data to obtain a reconstructed coordinate conversion error information graph; wherein the point cloud decoding method further comprises:

predict the coordinate conversion error of each pixel in the coordinate conversion error information graph based on a placeholder information graph identifying whether a respective pixel in the two-dimensional regularized projection plane structure is empty or non-empty, a depth information graph representing a distance between a corresponding point of each non-empty pixel in the two-dimensional regularized projection plane structure and a coordinate origin, and a projection residual information graph representing a residual between a position of a corresponding raw point and an actual projection position of each non-empty pixel in the two-dimensional regularized projection plane structure, to obtain a prediction residual of a coordinate conversion error; or predicting the coordinate conversion error of each pixel in the coordinate conversion error information graph based on reconstructed coordinate conversion error information of decoded pixels to obtain a prediction residual of a coordinate conversion error; wherein predicting the coordinate conversion error of each pixel in the coordinate conversion error information graph based on the placeholder information graph, the depth information graph and the projection residual information graph, to obtain the prediction residual comprises:

traversing the pixels in the coordinate conversion error information graph according to a specified scanning order, and identifying decoded non-empty pixels in an area adjacent to a current non-empty pixel based on the placeholder information graph; determining a relationship concluding that two decoded non-empty pixels have similar coordinate conversion errors, if they have similar depth information; and determining a relationship concluding that two decoded non-empty pixels have similar coordinate conversion errors, if they have a similar projection residual, wherein the two decoded non-empty pixels having similar depth information and similar projection residual are selected as reference pixels; and estimating coordinate conversion error information corresponding to a current pixel based on the relationship between depth information and coordinate conversion error information and the relationship between projection residual information and coordinate conversion error information, to obtain an estimated value of the coordinate conversion error of the current pixel;

wherein an average of the reconstructed coordinate conversion error information of the reference pixels is calculated and used as the predicted value, and the coordinate conversion error information of the current pixel is reconstructed based on the predicted value and the prediction residual obtained by parsing.

6. The point cloud decoding method according to claim 5, wherein the obtaining a two-dimensional projection plane structure based on the one or more pieces of two-dimensional graphic information comprises:

obtaining the coordinate conversion error information of each non-empty pixel in the two-dimensional projection plane structure, and obtaining the reconstructed two-dimensional projection plane structure based on the coordinate conversion error information.

7. The point cloud decoding method according to any one of claims 5-6, the reconstructing the point cloud by using the two-dimensional projection plane structure comprises:

reconstructing a spatial point for each non-empty pixel in the two-dimensional projection structure based on depth information and regularization parameters, and obtaining the reconstructed point cloud.

8. A point cloud decoding apparatus based on two-dimensional regularized plane projection, comprising:

a second data acquisition module (21), configured to acquire and decoding bit stream information to obtain parsed data;
a first reconstruction module (22), configured to reconstruct one or more pieces of two-dimensional graphic information based on the parsed data which comprises prediction residual of the coordinate conversion error information representing a residual between a spatial position obtained by back projection of each non-empty pixel in the two-dimensional regularized projection plane structure and a spatial position of a raw point corresponding to the pixel;
a second reconstruction module (23), configured to obtain a two-dimensional projection plane structure based on the one or more pieces of two-dimensional graphic information; and
a point cloud reconstruction module (24), configured to reconstruct a point cloud by using the two-dimensional projection plane structure,
wherein the decoding bit stream information comprises using existing entropy decoding technology to decode the bit stream information, wherein the reconstructing one or more pieces of two-dimensional graphic information based on the parsed data comprises:
reconstructing a coordinate conversion error information graph based on a prediction residual of the coordinate conversion error information graph in the parsed data to obtain a reconstructed coordinate conversion error information graph; and the first reconstruction module (22) is configured to:

predict the coordinate conversion error of each pixel in the coordinate conversion error information graph based on a placeholder information graph identifying whether a respective pixel in the two-dimensional regularized projection plane structure is empty or non-empty, a depth information graph representing a distance between a corresponding point of each non-empty pixel in the two-dimensional regularized projection plane structure and a coordinate origin, and a projection residual information graph representing a residual between a position of a corresponding raw point and an actual projection position of each non-empty pixel in the two-dimensional regularized projection plane structure, to obtain a prediction residual of a coordinate conversion error; or
predict the coordinate conversion error of each pixel in the coordinate conversion error information graph based on reconstructed coordinate conversion error information of decoded pixels to obtain a prediction residual of a coordinate conversion error; wherein, for predicting the coordinate conversion error of each pixel in the coordinate conversion error information graph based on the placeholder information graph, the depth information and the projection residual information graph, to obtain the prediction residual, the first reconstruction module (22) is configured to:

traverse the pixels in the coordinate conversion error information graph according to a specified scanning order, and identify decoded non-empty pixels in an area adjacent to a current non-empty pixel based on the placeholder information graph;
determine a relationsnip concluding that two decoded non-empty pixels have similar coordinate conversion errors, if they have similar depth information; and determine a relationship concluding that two decoded non-empty pixels have similar coordinate conversion errors, if they have a similar projection residual, wherein the two decoded non-empty pixels having similar depth information and similar projection residual are selected as reference pixels; and

estimate coordinate conversion error information corresponding to a current pixel based on the relationship between depth information and coordinate conversion error information and the relationship between projection residual information and coordinate conversion error information, to obtain an estimated value of the coordinate conversion error of the current pixel;

wherein an average of the reconstructed coordinate conversion error information of the reference pixels is calculated and used as the predicted value and the coordinate conversion error information of the current pixel is reconstructed based on the predicted value and the prediction residual obtained by parsing.

9. The point cloud decoding apparatus according to claim 8, wherein the second reconstruction module (23) is configured to:

obtain the coordinate conversion error information of each non-empty pixel in the two-dimensional projection plane structure, and
obtain the reconstructed two-dimensional projection plane structure based on the coordinate conversion error information.

**Patentansprüche**

1. Ein Punktwolken-Codierungsverfahren basierend auf zweidimensionaler regularisierter Ebenenprojektion, umfassend:

Erfassen (S1) von Rohpunktwolkendaten;
Durchführen (S2) einer zweidimensionalen regularisierten Ebenenprojektion der Rohpunktwolkendaten zum Erhalten einer zweidimensionalen Projektionsstrukturebene;
Erhalten (S3) eines oder mehrerer Stück zweidimensionaler grafischer Informationen, die ein Koordinatentransformationsfehler-Informationsdiagramm umfassen, das einen Restwert zwischen einer durch Rückprojektion eines jeden nicht-leeren Pixels in der zweidimensionalen regularisierten Projektionsstrukturebene erhaltenen räumlichen Position und einer räumlichen Position eines Rohpunkts, der dem Pixel entspricht, darstellt, basierend auf der zweidimensionalen Projektionsstrukturebene; und
Codieren (S4) der einen oder mehrerer Stück zweidimensionaler grafischer Informationen zum Erhalten von Bitstrominformationen, wobei das Codieren das Koordinatentransformationsfehler-Informationsdiagramm umfasst, um einen Koordinatentransformationsfehler-Informations-Bitstrom zu erhalten; wobei das Codieren des Koordinatentransformationsfehler-Informationsdiagramms zum Erhalten eines Koordinatentransformationsfehler-Informations-Bitstroms umfasst:

Vorhersagen des Koordinatentransformationsfehlers jedes Pixels im Koordinatentransformationsfehler-Informationsdiagramm basierend auf einem Platzhalter-Informationsdiagramm, das angibt, ob ein jeweiliges Pixel in der zweidimensionalen regularisierten Projektionsstrukturebene leer oder nicht leer ist, einem Tiefeninformationsdiagramm, das einen Abstand zwischen einem entsprechenden Punkt jedes nicht-leeren Pixels in der zweidimensionalen regularisierten Projektionsstrukturebene und einem Koordinatenursprung darstellt, und einem Projektionsrestwert-Informationsdiagramm, das einen Restwert zwischen der Position eines entsprechenden Rohpunkts und einer tatsächlichen Projektionsposition jedes nicht-leeren Pixels in der zweidimensionalen regularisierten Projektionsstrukturebene darstellt, um einen Vorhersagerestwert eines Koordinatentransformationsfehlers zu erhalten; oder
Vorhersagen des Koordinatentransformationsfehlers jedes Pixels im Koordinatentransformationsfehler-Informationsdiagramm basierend auf rekonstruierten Koordinatentransformationsfehler-Informationen codierter und dekodierter Pixel, um einen Vorhersagerestwert eines Koordinatentransformationsfehlers zu erhalten; und
Codieren des Vorhersagerestwerts des Koordinatentransformationsfehlers zum Erhalten des Koordinatentransformationsfehler-Informations-Bitstroms; wobei das Vorhersagen des Koordinatentransformationsfehlers jedes Pixels im Koordinatentransformationsfehler-Informationsdiagramm basierend auf dem Platzhalter-Informationsdiagramm, dem Tiefeninformationsdiagramm und dem Projektionsrestwert-Informationsdiagramm zum Erhalten des Vorhersagerestwerts des Koordinatentransformationsfehlers umfasst:

Das Durchlaufen der Pixel im Fehlerinformationsdiagramm zur Koordinatenkonvertierung gemäß einer vorgegebenen Scanreihenfolge sowie das Identifizieren von codierten und decodierten nicht-leeren Pixeln in einem Bereich, der an ein aktuelles nicht-leeres Pixel angrenzt, basierend auf dem Platzhalter-Informationsdiagramm; Feststellen einer Beziehung mit dem Schluss, dass zwei codierte und decodierte nicht-leere Pixel ähnliche Koordinatenkonvertierungsfehler aufweisen, wenn sie ähnliche Tiefeninformationen besitzen; und das Feststellen einer Beziehung mit dem Schluss, dass zwei codierte und decodierte nicht-leere Pixel ähnliche Koordinatenkonvertierungsfehler aufweisen, wenn sie einen ähnlichen Projektionsrest haben, wobei die beiden codierten und decodierten nicht-leeren Pixel mit ähnlichen Tiefeninformationen und ähnlichem Projektionsrest als Referenzpixel ausgewählt werden; Schätzen von Fehlerinformationen der Koordinatenkonvertierung, die einem aktuellen Pixel entsprechen, basierend auf der Beziehung zwischen Tiefeninformation und Fehlerinformation der Koordinatenkonvertierung sowie der Beziehung zwischen Projektionsrestinformation und Fehlerinformation der Koordinatenkonvertierung, um einen Schätzwert des Koordinatenkonvertierungsfehlers des aktuellen Pixels zu erhalten; und Verwendung des Schätzwertes als Prognosewert für den Koordinatenkonvertierungsfehler des aktuellen Pixels, um einen Prognoserest des Koordinatenkonvertierungsfehlers des aktuellen Pixels zu ermitteln; wobei ein Mittelwert der rekonstruierten Fehlerinformationen der Koordinatenkonvertierung der Referenzpixel berechnet und als Prognosewert verwendet wird.

2. Verfahren zur Kodierung von Punktwolken gemäß Anspruch 1, wobei das Kodieren des Fehlerinformationsdiagramms der Koordinatenkonvertierung zur Erzeugung des Bitstroms der Fehlerinformation der Koordinatenkonvertierung weiterhin folgendes umfasst:

Vorhersage des Koordinatenkonvertierungsfehlers jedes Pixels im Fehlerinformationsdiagramm der Koordinatenkonvertierung auf Basis eines Teils der Informationsdiagramme, nämlich des Platzhalter-Informationsdiagramms, des Tiefeninformationsdiagramms und des Projektionsrestinformationsdiagramms, um einen Prognoserest eines Koordinatenkonvertierungsfehlers zu erhalten; und Kodierung des Prognoserests des Koordinatenkonvertierungsfehlers, um den Bitstrom der Fehlerinformation der Koordinatenkonvertierung zu erhalten.

3. Punktwolken-Codierungsgerät basierend auf zweidimensionaler regularisierter Ebenenprojektion, umfassend:

Ein erstes Datenerfassungsmodul (11), das dazu konfiguriert ist, Roh-Punktwolken-Daten zu erfassen; Ein Projektionsmodul (12), das konfiguriert ist, eine zweidimensionale regularisierte Ebenenprojektion der Roh-Punktwolkendaten durchzuführen, um eine zweidimensionale Projektionsflächenstruktur zu erhalten; ein Datenverarbeitungsmodul (13), das dazu konfiguriert ist, ein oder mehrere zweidimensionale grafische Informationen zu erhalten, die ein Koordinatenkonvertierungsfehlerinformationsdiagramm umfassen, welches einen Residual zwischen einer durch Rückprojektion jedes nicht-leeren Pixels in der zweidimensionalen regularisierten Projektionsflächenstruktur erhaltenen Raumposition und einer Raumposition eines dem Pixel entsprechenden Rohpunkts auf Grundlage der zweidimensionalen Projektionsflächenstruktur darstellt; und ein Codierungsmodul (14), das dazu konfiguriert ist, die ein oder mehrere Teile der zweidimensionalen grafischen Informationen zu codieren, um Bitstrominformationen zu erhalten, wobei das Codieren des Koordinatenkonvertierungsfehlerinformationsdiagramms zur Gewinnung eines Koordinatenkonvertierungsfehlerinformationsbitstroms umfasst:

Vorhersage von Pixeln im Koordinatenkonvertierungsfehlerinformationsdiagramm basierend auf einem Platzhalterinformationsdiagramm, das angibt, ob ein jeweiliges Pixel in der zweidimensionalen regularisierten Projektionsflächenstruktur leer oder nicht-leer ist, einem Tiefeninformationsdiagramm, das eine Entfernung zwischen dem entsprechenden Punkt jedes nicht-leeren Pixels und einem Koordinatenursprung wiedergibt, und einem Projektionsresidualinformationsdiagramm, das ein Residuum zwischen einer Position des entsprechenden Rohpunkts und einer tatsächlichen Projektionsposition jedes nicht-leeren Pixels in der zweidimensionalen regularisierten Projektionsflächenstruktur darstellt, um ein Prädiktionsresidual eines Koordinatenkonvertierungsfehlers zu erhalten; oder Vorhersage von Pixeln im Koordinatenkonvertierungsfehlerinformationsdiagramm basierend auf rekonstruierten Koordinatenkonvertierungsfehlerinformationen codierter und decodierter Pixel, um ein Prädiktionsresidual eines Koordinatenkonvertierungsfehlers zu erhalten; und Codieren des Prädiktionsresiduals des Koordinatenkonvertierungsfehlers, um den Koordinatenkonvertierungsfehlerinformationsbitstrom zu erhalten; wobei die Vorhersage von Pixeln im Koordinatenkonvertierungsfehlerinformationsdiagramm basierend auf dem Platzhalterinformationsdiagramm, dem Tiefeninformationsdiagramm und dem Projektionsresidualinformationsdiagramm zum Erhalt des Prädiktionsresiduals eines Koordinatenkonvertierungsfehlers Folgendes umfasst:

Durchlaufen der Pixel im Koordinatenkonvertierungsfehlerinformationsdiagramm gemäß einer angegebenen Scanreihenfolge und Identifizierung codierter und decodierter nicht-leerer Pixel in einem Bereich angrenzend an ein aktuelles nicht-leeres Pixel basierend auf dem Platzhalterinformationsdiagramm;

Bestimmen einer Beziehung, die darauf schließt, dass zwei codierte und decodierte nicht-leere Pixel ähnliche Koordinatenumwandlungsfehler aufweisen, wenn sie ähnliche Tiefeninformationen haben; und Bestimmen einer Beziehung, die darauf schließt, dass zwei codierte und decodierte nicht-leere Pixel ähnliche Koordinatenumwandlungsfehler haben, wenn sie einen ähnlichen Projektionsresidualwert haben, wobei die beiden codierten und decodierten nicht-leeren Pixel mit ähnlichen Tiefeninformationen und ähnlichem Projektionsresidual als Referenzpixel ausgewählt werden;

Schätzen der Koordinatenumwandlungsfehlerinformationen, die einem aktuellen Pixel entsprechen, basierend auf der Beziehung zwischen Tiefeninformationen und Koordinatenumwandlungsfehlerinformationen sowie der Beziehung zwischen Projektionsresidualinformation und Koordinatenumwandlungsfehlerinformation, um einen geschätzten Wert des Koordinatenumwandlungsfehlers des aktuellen Pixels zu erhalten; und

Verwenden des geschätzten Wertes als vorhergesagten Wert des Koordinatenumwandlungsfehlers des aktuellen Pixels, um einen Vorhersagerestwert des Koordinatenumwandlungsfehlers des aktuellen Pixels zu erhalten; wobei ein Durchschnitt der rekonstruierten Koordinatenumwandlungsfehlerinformationen der Referenzpixel berechnet und als vorhergesagter Wert verwendet wird.

4. Vorrichtung zur Punktwolkenkodierung nach Anspruch 3, wobei das Kodieren des Koordinatenumwandlungsfehlerinformationsgraphen zum Erhalten des Koordinatenumwandlungsfehlerinformations-Bitstroms weiterhin Folgendes umfasst:

Vorhersage von Pixeln im Koordinatenumwandlungsfehlerinformationsgraphen basierend auf Teilen von Informationsgraphen aus einem Platzhalter-Informationsgraphen, einem Tiefeninformationsgraphen und einem Projektionsresidualinformationsgraphen, um einen Vorhersagerestwert eines Koordinatenumwandlungsfehlers zu erhalten; und Kodieren des Vorhersagerestwerts des Koordinatenumwandlungsfehlers, um den Koordinatenumwandlungsfehlerinformations-Bitstrom zu erhalten.

5. Punktwolkendecodierverfahren basierend auf zweidimensionaler regularisierter Ebenenprojektion, umfassend:

Erfassen (Schritt 1) und Decodieren von Bitstrominformationen zum Erhalten von analysierten Daten;

Rekonstruieren (Schritt 2) von ein oder mehreren Teilen zweidimensionaler Grafik-Informationen basierend auf den analysierten Daten, welche den Vorhersagerestwert der Koordinatenumwandlungsfehlerinformation umfassen, der einen Restwert zwischen einer durch Rückprojektion jedes nicht-leeren Pixels in der zweidimensionalen regularisierten Projektionsebenenstruktur erhaltenen räumlichen Position und einer dem Pixel entsprechenden räumlichen Rohpunktposition darstellt;

Erhalten (Schritt 3) einer zweidimensionalen Projektionsebenenstruktur basierend auf den ein oder mehreren Teilen zweidimensionaler Grafik-Informationen; und

Rekonstruieren (Schritt 4) einer Punktwolke unter Verwendung der zweidimensionalen Projektionsebenenstruktur,

wobei die zu dekodierenden Bitstrominformationen unter Verwendung vorhandener Entropiedekodierungstechnologien dekodiert werden, wobei das Rekonstruieren (Schritt 2) eines oder mehrerer Teile zweidimensionaler Grafikdaten auf Grundlage der analysierten Daten Folgendes umfasst:

Rekonstruieren eines Diagramms mit Koordinatenkonvertierungsfehlerinformationen auf Grundlage eines Vorhersagerestwerts des Diagramms mit Koordinatenkonvertierungsfehlerinformationen in den analysierten Daten, um ein rekonstruiertes Diagramm der Koordinatenkonvertierungsfehlerinformationen zu erhalten;

wobei das Punktwolken-Dekodierungsverfahren ferner Folgendes umfasst:

Vorhersage des Koordinatenkonvertierungsfehlers jedes Pixels im Diagramm der Koordinatenkonvertierungsfehlerinformationen auf Basis eines Platzhalter-Informationsdiagramms, das angibt, ob ein entsprechendes Pixel in der zweidimensionalen regularisierten Projektionsflächenstruktur leer oder nicht leer ist, eines Tiefeninformationsdiagramms, das eine Distanz zwischen einem entsprechenden Punkt jedes nicht leeren Pixels in der zweidimensionalen regularisierten Projektionsflächenstruktur und einem Koordinatenursprung darstellt, und eines Projektionsrest-Informationsdiagramms, das einen Restwert zwischen einer Position eines entsprechenden Rohpunkts und einer tatsächlichen Projektionsposition jedes nicht leeren Pixels in der zweidimensionalen regularisierten Projektionsflächenstruktur darstellt, um einen Vorhersagerestwert eines Koordinatenkonvertierungsfehlers zu erhalten; oder

Vorhersage des Koordinatenkonvertierungsfehlers jedes Pixels im Diagramm der Koordinatenkonvertierungsfehlerinformationen auf Grundlage rekonstruierten Koordinatenkonvertierungsfehlerinformationen der dekodierten Pixel, um einen Vorhersagerestwert eines Koordinatenkonvertierungsfehlers zu erhalten; wobei die Vorhersage des Koordinatenkonvertierungsfehlers jedes Pixels im Diagramm der Koordinatenkonvertierungsfehlerinformationen auf der Grundlage des Platzhalter-Informationsdiagramms, des Tiefeninformationsdiagramms und des Projektionsrest-Informationsdiagramms zur Ermittlung des Vorhersagerestwerts umfasst:

Durchlaufen der Pixel im Diagramm der Koordinatenkonvertierungsfehlerinformationen gemäß einer angegebenen Abtastreihenfolge und Identifizierung der dekodierten nicht leeren Pixel in einem Bereich, der einem aktuellen nicht leeren Pixel benachbart ist, anhand des Platzhalter-Informationsdiagramms;

Bestimmung einer Beziehung, bei der zwei dekodierte nicht leere Pixel als ähnlich in Bezug auf ihre Koordinatenkonvertierungsfehler angesehen werden, wenn sie ähnliche Tiefeninformationen aufweisen; und Bestimmung einer Beziehung, bei der zwei dekodierte nicht leere Pixel als ähnlich in Bezug auf ihre Koordinatenkonvertierungsfehler angesehen werden, wenn sie einen ähnlichen Projektionsrest aufweisen, wobei die beiden dekodierten nicht leeren Pixel mit ähnlichen Tiefeninformationen und ähnlichem Projektionsrest als Referenzpixel ausgewählt werden; und

Schätzung der Koordinatenkonvertierungsfehlerinformationen, die einem aktuellen Pixel entsprechen, basierend auf der Beziehung zwischen Tiefeninformationen und Koordinatenkonvertierungsfehlerinformationen sowie der Beziehung zwischen Projektionsresidualinformationen und Koordinatenkonvertierungsfehlerinformationen, um einen Schätzwert des Koordinatenkonvertierungsfehlers des aktuellen Pixels zu erhalten; wobei

ein Mittelwert der rekonstruierten Koordinatenkonvertierungsfehlerinformation der Referenzpixel berechnet und als Vorhersagewert verwendet wird, und die Koordinatenkonvertierungsfehlerinformation des aktuellen Pixels basierend auf dem Vorhersagewert und dem durch das Parsen erhaltenen Vorhersageresidual rekonstruiert wird.

6. Verfahren zum Dekodieren von Punktwolken nach Anspruch 5, wobei das Erhalten einer zweidimensionalen Projektionsflächenstruktur auf Basis der einen oder mehreren zweidimensionalen Grafik-Informationen Folgendes umfasst:

Ermitteln der Koordinatenkonvertierungsfehlerinformationen jedes nicht-leeren Pixels in der zweidimensionalen Projektionsflächenstruktur, und
Erhalten der rekonstruierten zweidimensionalen Projektionsflächenstruktur basierend auf den Koordinatenkonvertierungsfehlerinformationen.

7. Das Punktwolken-Dekodierungsverfahren gemäß einem der Ansprüche 5-6, wobei das Rekonstruieren der Punktwolke unter Verwendung der zweidimensionalen Projektionsflächenstruktur Folgendes umfasst:
Rekonstruktion eines räumlichen Punktes für jedes nicht-leere Pixel in der zweidimensionalen Projektionsstruktur basierend auf Tiefeninformationen und Regularisierungsparametern, und Erhalten der rekonstruierten Punktwolke.

8. Vorrichtung zum Dekodieren von Punktwolken basierend auf zweidimensionaler regularisierter Ebenenprojektion, umfassend:

Ein zweites Datenerfassungsmodul (21), das eingerichtet ist, um Bitstrom-Informationen zu erfassen und zu dekodieren und so analysierte Daten zu erhalten;
Ein erstes Rekonstruktionsmodul (22), das eingerichtet ist, eine oder mehrere zweidimensionale Grafik-Informationen auf Basis der analysierten Daten zu rekonstruieren, die das Vorhersageresidual der Koordinatenkonvertierungsfehlerinformation umfassen, welches einen Residual zwischen einer durch Rückprojektion jedes nicht-leeren Pixels in der zweidimensionalen regularisierten Projektionsflächenstruktur erhaltenen räumlichen Position und einer dem Pixel entsprechenden Rohpunktposition darstellt;
Ein zweites Rekonstruktionsmodul (23), das eingerichtet ist, eine zweidimensionale Projektionsflächenstruktur basierend auf den einen oder mehreren zweidimensionalen Grafik-Informationen zu erhalten; und
Ein Punktwolkenrekonstruktionsmodul (24), das eingerichtet ist, eine Punktwolke mithilfe der zweidimensionalen Projektionsflächenstruktur zu rekonstruieren,
wobei die dekodierte Bitstrominformation die Verwendung bestehender Entropiedekodierungstechnologie zum Dekodieren der Bitstrominformation umfasst, wobei das Rekonstruieren von einem oder mehreren Teilen zweidimensionaler Grafik-Informationen auf Basis der analysierten Daten Folgendes umfasst:

Rekonstruieren einer Koordinatentransformationsfehlerinformationsgrafik basierend auf einem Prädiktionsresidual der Koordinatentransformationsfehlerinformationsgrafik in den analysierten Daten, um eine rekonstruierte Koordinatentransformationsfehlerinformationsgrafik zu erhalten; und das erste Rekonstruktionsmodul (22) ist konfiguriert, um:

den Koordinatentransformationsfehler jedes Pixels in der Koordinatentransformationsfehlerinformationsgrafik vorherzusagen, basierend auf einer Platzhalter-Informationsgrafik, die angibt, ob ein entsprechendes Pixel in der zweidimensionalen regularisierten Projektionsflächenstruktur leer oder nicht leer ist, einer Tiefen-Informationsgrafik, die einen Abstand zwischen einem entsprechenden Punkt jedes nicht-leeren Pixels in der zweidimensionalen regularisierten Projektionsflächenstruktur und einem Koordinatenursprung darstellt, und einer Projektionsresidual-Informationsgrafik, die einen Residual zwischen der Position eines entsprechenden Rohpunkts und einer tatsächlichen Projektionsposition jedes nicht-leeren Pixels in der zweidimensionalen regularisierten Projektionsflächenstruktur darstellt, um ein Prädiktionsresidual eines Koordinatentransformationsfehlers zu erhalten; oder
den Koordinatentransformationsfehler jedes Pixels in der Koordinatentransformationsfehlerinformationsgrafik anhand rekonstruierter Koordinatentransformationsfehlerinformationen dekodierter Pixel vorherzusagen, um ein Prädiktionsresidual eines Koordinatentransformationsfehlers zu erhalten; wobei für die Vorhersage des Koordinatentransformationsfehlers jedes Pixels in der Koordinatentransformation

sfehlerinformationsgrafik auf Grundlage der Platzhalter-Informationsgrafik, der Tiefeninformation und der Projektionsresidual-Informationsgrafik zur Ermittlung des Prädiktionsresiduals das erste Rekonstruktionsmodul (22) folgendermaßen konfiguriert ist:

die Pixel in der Koordinatentransformationsfehlerinformationsgrafik gemäß einer angegebenen Abtastreihenfolge zu durchlaufen und anhand der Platzhalter-Informationsgrafik dekodierte nicht-leere Pixel in einem an einen aktuellen nicht-leeren Pixel angrenzenden Bereich zu identifizieren;

eine Beziehung zu bestimmen, die feststellt, dass zwei dekodierte nicht-leere Pixel ähnliche Koordinatentransformationsfehler aufweisen, wenn sie ähnliche Tiefeninformationen haben;

und eine Beziehung zu bestimmen, die feststellt, dass zwei dekodierte nicht-leere Pixel ähnliche Koordinatentransformationsfehler aufweisen, wenn sie ein ähnliches Projektionsresidual haben, wobei die beiden dekodierten nicht-leeren Pixel mit ähnlichen Tiefeninformationen und ähnlichem Projektionsresidual als Referenzpixel ausgewählt werden; und

Schätzen Sie die Koordinatentransformationsfehlerinformation entsprechend einem aktuellen Pixel auf der Grundlage der Beziehung zwischen Tiefeninformation und Koordinatentransformationsfehlerinformation sowie der Beziehung zwischen Projektion-Residueninformation und Koordinatentransformationsfehlerinformation, um einen geschätzten Wert des Koordinatentransformationsfehlers des aktuellen Pixels zu erhalten; wobei ein

Mittelwert der rekonstruierten Koordinatentransformationsfehlerinformation der Referenzpixel berechnet und als Vorhersagewert verwendet wird und die Koordinatentransformationsfehlerinformation des aktuellen Pixels basierend auf dem Vorhersagewert und der durch das Parsen erhaltenen Vorhersageresiduen rekonstruiert wird.

9. Vorrichtung zur Punktwolken-Dekodierung nach Anspruch 8, wobei das zweite Rekonstruktionsmodul (23) konfiguriert ist, um:

die Koordinatentransformationsfehlerinformation jedes nicht-leeren Pixels in der zweidimensionalen Projektionsflächenstruktur zu erhalten, und

die rekonstruierte zweidimensionale Projektionsflächenstruktur auf Grundlage der Koordinatentransformationsfehlerinformation zu erhalten.

**Revendications**

1. Procédé de codage de nuage de points basé sur une projection plane bidimensionnelle régularisée, comprenant :

acquisition (S1) de données brutes de nuage de points ;

réalisation (S2) d'une projection plane bidimensionnelle régularisée sur les données brutes de nuage de points afin d'obtenir une structure de plan de projection bidimensionnel ;

obtention (S3) d'une ou plusieurs informations graphiques bidimensionnelles comprenant un graphe d'informations d'erreur de conversion de coordonnées représentant un résidu entre une position spatiale obtenue par rétroprojection de chaque pixel non vide de la structure de projection plane bidimensionnelle régularisée et une position spatiale du point brut correspondant au pixel, sur la base de la structure de plan de projection bidimensionnel ; et

codage (S4) de l'une ou plusieurs informations graphiques bidimensionnelles afin d'obtenir des informations de flux binaire, comprenant le codage du graphe d'informations d'erreur de conversion de coordonnées pour obtenir un flux binaire d'informations d'erreur de conversion de coordonnées ; dans lequel le codage du graphe d'informations d'erreur de conversion de coordonnées pour obtenir un flux binaire d'informations d'erreur de conversion de coordonnées comprend :

prédiction de l'erreur de conversion de coordonnées de chaque pixel dans le graphe d'informations d'erreur de conversion de coordonnées sur la base d'un graphe d'informations d'emplacement indiquant si chaque pixel de la structure de projection plane bidimensionnelle régularisée est vide ou non, d'un graphe d'informations de profondeur représentant une distance entre un point correspondant à chaque pixel non vide de la structure de projection plane bidimensionnelle régularisée et une origine de coordonnées, et d'un graphe d'informations de résidu de projection représentant un résidu entre la position d'un point brut correspondant et la position réelle de projection de chaque pixel non vide dans la structure de projection plane bidimensionnelle régularisée, afin d'obtenir un résidu de prédiction d'une erreur de conversion de coordonnées ; ou

prédiction de l'erreur de conversion de coordonnées de chaque pixel dans le graphe d'informations d'erreur de conversion de coordonnées sur la base des informations d'erreur de conversion de coordonnées reconstruites des pixels encodés et décodés afin d'obtenir un résidu de prédiction de l'erreur de conversion de coordonnées ; et codage du résidu de prédiction de l'erreur de conversion de coordonnées afin d'obtenir le flux binaire d'informations d'erreur de conversion de coordonnées ; et dans lequel la prédiction de l'erreur de conversion de coordonnées de chaque pixel dans le graphe d'informations d'erreur de conversion de coordonnées sur la base du graphe d'informations d'emplacement, du graphe d'informations de profondeur et du graphe d'informations de résidu de projection afin d'obtenir le résidu de prédiction de l'erreur de conversion de coordonnées comprend :

parcourir les pixels dans le graphique d'information d'erreur de conversion de coordonnées selon un ordre de balayage spécifié, et identifier les pixels non vides encodés et décodés dans une zone adjacente à un pixel non vide actuel sur la base du graphique d'informations de substitut ;

déterminer une relation concluant que deux pixels non vides encodés et décodés possèdent des erreurs de conversion de coordonnées similaires s'ils ont des informations de profondeur similaires ; et déterminer une relation concluant que deux pixels non vides encodés et décodés possèdent des erreurs de conversion de coordonnées similaires s'ils ont un résidu de projection similaire, les deux pixels non vides encodés et décodés ayant des informations de profondeur similaires et un résidu de projection similaire étant sélectionnés comme pixels de référence ; estimer l'information d'erreur de conversion de coordonnées correspondant à un pixel actuel sur la base de la relation entre l'information de profondeur et l'information d'erreur de conversion de coordonnées ainsi que de la relation entre l'information du résidu de projection et l'information d'erreur de conversion de coordonnées, afin d'obtenir une valeur estimée de l'erreur de conversion de coordonnées du pixel actuel ; et

utiliser la valeur estimée comme valeur prédite de l'erreur de conversion de coordonnées du pixel actuel afin d'obtenir un résidu de prévision de l'erreur de conversion de coordonnées du pixel actuel ; une moyenne des informations d'erreur de conversion de coordonnées reconstruites des pixels de référence étant calculée et utilisée comme valeur prédite.

2. Le procédé de codage de cloud de points selon la revendication 1, dans lequel le codage du graphique d'information d'erreur de conversion des coordonnées pour obtenir le flux binaire d'information d'erreur de conversion des coordonnées comprend en outre :

prédire l'erreur de conversion de coordonnées de chaque pixel dans le graphique d'information d'erreur de conversion de coordonnées sur la base d'une partie des graphiques d'information parmi un graphique d'informations de substitut, un graphique d'informations de profondeur et un graphique d'informations de résidu de projection afin d'obtenir un résidu de prévision d'une erreur de conversion de coordonnées ; et encoder le résidu de prévision de l'erreur de conversion de coordonnées afin d'obtenir le flux binaire d'information d'erreur de conversion de coordonnées.

3. Un appareil d'encodage de cloud de points basé sur une projection plane régularisée bidimensionnelle, comprenant :

un premier module d'acquisition de données (11), configuré pour acquérir les données brutes du cloud de points ;

un module de projection (12), configuré pour effectuer une projection plane régularisée bidimensionnelle sur les données brutes du cloud de points afin d'obtenir une structure plane de projection bidimensionnelle ;

un module de traitement de données (13), configuré pour obtenir une ou plusieurs informations graphiques bidimensionnelles comprenant un graphique d'informations d'erreur de conversion de coordonnées représentant un résidu entre une position spatiale obtenue par rétroprojection de chaque pixel non vide dans la structure du plan de projection bidimensionnel régularisé et une position spatiale d'un point brut correspondant au pixel, sur la base de la structure du plan de projection bidimensionnel ; et un module de codage (14), configuré pour coder une ou plusieurs informations graphiques bidimensionnelles afin d'obtenir des informations de flux binaire, ce qui comprend le codage du graphique d'informations d'erreur de conversion de coordonnées pour obtenir un flux binaire d'informations d'erreur de conversion de coordonnées, où le codage du graphique d'informations d'erreur de conversion de coordonnées pour obtenir le flux binaire d'informations d'erreur de conversion de coordonnées comprend :

prédire les pixels dans le graphique d'informations d'erreur de conversion de coordonnées en se basant sur un graphique d'informations de type indicateur identifiant si chaque pixel de la structure du plan de projection bidimensionnel régularisé est vide ou non vide, un graphique d'informations de profondeur représentant une distance entre le point correspondant de chaque pixel non vide dans la structure du plan de projection bidimensionnel régularisé et une origine des coordonnées, et un graphique d'informations de résidu de projection représentant un résidu entre la position du point brut correspondant et la position de projection réelle de chaque pixel non vide dans la structure du plan de projection bidimensionnel régularisé, afin d'obtenir un résidu de prédiction d'une erreur de conversion de coordonnées ; ou prédire les pixels dans le graphique d'informations d'erreur de conversion de coordonnées en se basant sur les informations d'erreur de conversion de coordonnées reconstruites des pixels encodés et décodés pour obtenir un résidu de prédiction d'une erreur de conversion de coordonnées ; et coder le résidu de prédiction de l'erreur de conversion de coordonnées afin d'obtenir le flux binaire d'informations d'erreur de conversion de coordonnées ; où la prédiction des pixels dans le graphique d'informations d'erreur de conversion de coordonnées en se basant sur le graphique d'informations de type indicateur, le graphique d'informations de profondeur et le graphique d'informations de résidu de projection pour obtenir le résidu de prédiction d'une erreur de conversion de coordonnées comprend :

parcourir les pixels dans le graphique d'informations d'erreur de conversion de coordonnées selon un ordre de balayage spécifié, et identifier les pixels non vides encodés et décodés dans une zone adjacente à un pixel non vide courant sur la base du graphique d'informations de type indicateur ; déterminer une relation concluant que deux pixels non vides encodés et décodés présentent des erreurs de conversion de coordonnées similaires, s'ils ont des informations de profondeur similaires ; et déterminer une relation concluant que deux pixels non vides encodés et décodés présentent des erreurs de conversion de coordonnées similaires, s'ils ont un résidu de projection similaire, les deux pixels non vides encodés et décodés ayant des informations de profondeur similaires et un résidu de projection similaire étant sélectionnés comme pixels de référence ; estimer les informations d'erreur de conversion de coordonnées correspondant à un pixel actuel sur la base de la relation entre les informations de profondeur et les informations d'erreur de conversion de coordonnées et de la relation entre les informations de résidu de projection et les informations d'erreur de conversion de coordonnées, afin d'obtenir une valeur estimée de l'erreur de conversion de coordonnées du pixel actuel ; et utiliser la valeur estimée comme valeur prédite de l'erreur de conversion de coordonnées du pixel actuel pour obtenir un résidu de prédiction de l'erreur de conversion de coordonnées du pixel actuel ; la moyenne des informations reconstruites d'erreur de conversion de coordonnées des pixels de référence étant calculée et utilisée comme valeur prédite.

**4.** Dispositif de codage de nuage de points selon la revendication 3, dans lequel l'encodage du graphe d'information d'erreur de conversion de coordonnées pour obtenir le flux binaire d'information d'erreur de conversion de coordonnées comprend en outre :

prédire les pixels dans le graphe d'information d'erreur de conversion de coordonnées en se basant sur une partie des graphes d'information parmi un graphe d'information de position de remplacement, un graphe d'information de profondeur, et un graphe d'information de résidu de projection afin d'obtenir un résidu de prédiction d'une erreur de conversion de coordonnées ; et encoder le résidu de prédiction de l'erreur de conversion de coordonnées pour obtenir le flux binaire d'information d'erreur de conversion de coordonnées.

5. Procédé de décodage de nuage de points basé sur la projection plane bidimensionnelle régularisée, comprenant :

acquérir (Étape 1) et décoder les informations du flux binaire pour obtenir des données analysées ;
reconstruire (Étape 2) une ou plusieurs informations graphiques bidimensionnelles sur la base des données analysées qui comprennent un résidu de prédiction des informations d'erreur de conversion de coordonnées représentant un résidu entre une position spatiale obtenue par rétroprojection de chaque pixel non vide dans la structure de plan de projection bidimensionnelle régularisée et une position spatiale d'un point brut correspondant au pixel ;
obtenir (Étape 3) une structure de plan de projection bidimensionnelle à partir d'une ou plusieurs informations graphiques bidimensionnelles ; et
reconstruire (Étape 4) un nuage de points en utilisant la structure de plan de projection bidimensionnelle,
où les informations du flux binaire de décodage comprennent l'utilisation de la technologie de décodage entropique existante pour décoder les informations du flux binaire, la reconstruction (Étape 2) d'une ou plusieurs informations graphiques bidimensionnelles en fonction des données analysées comprenant :
reconstruire un graphique d'informations d'erreur de conversion des coordonnées sur la base d'un résidu de prédiction du graphique d'informations d'erreur de conversion des coordonnées dans les données analysées afin d'obtenir un graphique d'informations d'erreur de conversion des coordonnées reconstruit ; la méthode de décodage du nuage de points comprend en outre :

prédire l'erreur de conversion des coordonnées de chaque pixel dans le graphique d'informations d'erreur de conversion des coordonnées sur la base d'un graphique d'informations de placeholder identifiant si chaque pixel correspondant dans la structure de plan de projection régularisée bidimensionnelle est vide ou non vide, d'un graphique d'informations de profondeur représentant une distance entre un point correspondant de chaque pixel non vide dans la structure de plan de projection régularisée bidimensionnelle et une origine de coordonnées, et d'un graphique d'informations de résidu de projection représentant un résidu entre la position d'un point brut correspondant et la position de projection réelle de chaque pixel non vide dans la structure de plan de projection régularisée bidimensionnelle, afin d'obtenir un résidu de prédiction d'une erreur de conversion de coordonnées ; ou
prédire l'erreur de conversion des coordonnées de chaque pixel dans le graphique d'informations d'erreur de conversion des coordonnées sur la base d'informations d'erreur de conversion des coordonnées reconstruites de pixels décodés afin d'obtenir un résidu de prédiction d'une erreur de conversion de coordonnées ; où la prédiction de l'erreur de conversion des coordonnées de chaque pixel dans le graphique d'informations d'erreur de conversion des coordonnées sur la base du graphique d'informations de placeholder, du graphique d'informations de profondeur et du graphique d'informations de résidu de projection, pour obtenir le résidu de prédiction comprend :

parcourir les pixels dans le graphique d'informations d'erreur de conversion des coordonnées selon un ordre de balayage spécifié, et identifier les pixels décodés non vides dans une zone adjacente à un pixel non vide actuel sur la base du graphique d'informations de placeholder ;
déterminer une relation concluant que deux pixels décodés non vides présentent des erreurs de conversion de coordonnées similaires, s'ils présentent des informations de profondeur similaires ; et déterminer une relation concluant que deux pixels décodés non vides présentent des erreurs de conversion de coordonnées similaires, s'ils présentent un résidu de projection similaire, les deux pixels décodés non vides ayant des informations de profondeur similaires et un résidu de projection similaire étant alors sélectionnés comme pixels de référence ; et estimer l'information d'erreur de conversion de coordonnées correspondant à un pixel courant sur la base de la relation entre l'information de profondeur et l'information d'erreur de conversion de coordonnées, ainsi que la relation entre l'information de résidu de projection et l'information d'erreur de conversion de coordonnées, afin d'obtenir une valeur estimée de l'erreur de conversion de coordonnées du pixel courant ; la moyenne des informations d'erreur de conversion de coordonnées reconstruites des pixels de référence étant calculée et utilisée comme valeur prédite, et l'information d'erreur de conversion de coordonnées du pixel courant étant reconstruite sur la base de la valeur prédite et du résidu de prédiction obtenu par le décodage.

6. Procédé de décodage de nuage de points selon la revendication 5, dans lequel l'obtention d'une structure de plan de projection bidimensionnelle sur la base d'une ou plusieurs informations graphiques bidimensionnelles comprend :

   obtenir l'information d'erreur de conversion de coordonnées de chaque pixel non vide dans la structure de plan de projection bidimensionnelle, et
   obtenir la structure de plan de projection bidimensionnelle reconstruite sur la base de l'information d'erreur de conversion de coordonnées.

7. Procédé de décodage de nuage de points selon l'une quelconque des revendications 5 à 6, la reconstruction du nuage de points en utilisant la structure de plan de projection bidimensionnelle comprenant :

   reconstruire un point spatial pour chaque pixel non vide dans la structure de projection bidimensionnelle sur la base de l'information de profondeur et des paramètres de régularisation, et
   obtenir le nuage de points reconstruit.

8. Dispositif de décodage de nuage de points basé sur la projection de plan régularisée bidimensionnelle, comprenant :

   un second module d'acquisition de données (21), conçu pour acquérir et décoder des informations de flux binaire afin d'obtenir des données analysées ;
   un premier module de reconstruction (22), conçu pour reconstruire une ou plusieurs informations graphiques bidimensionnelles à partir des données analysées, lesquelles comprennent le résidu de prédiction de l'information d'erreur de conversion de coordonnées représentant un résidu entre une position spatiale obtenue par rétro-projection de chaque pixel non vide dans la structure de plan de projection régularisée bidimensionnelle et une position spatiale d'un point brut correspondant au pixel ;
un second module de reconstruction (23), conçu pour obtenir une structure de plan de projection bidimensionnelle basée sur une ou plusieurs informations graphiques bidimensionnelles ; et
un module de reconstruction de nuage de points (24), conçu pour reconstruire un nuage de points au moyen de la structure de plan de projection bidimensionnelle,
dans lequel les informations du flux binaire de décodage comprennent l'utilisation d'une technologie de décodage par entropie existante pour décoder les informations du flux binaire, et dans lequel la reconstruction d'une ou plusieurs informations graphiques bidimensionnelles sur la base des données analysées comprend :
reconstruire un graphique d'informations sur l'erreur de conversion des coordonnées à partir d'un résiduel de prédiction du graphique d'informations sur l'erreur de conversion des coordonnées dans les données analysées afin d'obtenir un graphique d'informations sur l'erreur de conversion des coordonnées reconstruit ; et le premier module de reconstruction (22) est configuré pour :

   prédire l'erreur de conversion des coordonnées de chaque pixel dans le graphique d'informations sur l'erreur de conversion des coordonnées en se basant sur un graphique d'informations de type indicateur, identifiant si chaque pixel correspondant dans la structure de plan de projection régularisée bidimensionnelle est vide ou non vide, sur un graphique d'informations de profondeur représentant la distance entre un point correspondant de chaque pixel non vide dans la structure de plan de projection régularisée bidimensionnelle et l'origine des coordonnées, et sur un graphique d'informations de résidu de projection représentant un résidu entre la position d'un point brut correspondant et la position de projection réelle de chaque pixel non vide dans la structure de plan de projection régularisée bidimensionnelle, afin d'obtenir un résiduel de prédiction de l'erreur de conversion des coordonnées ; ou
   prédire l'erreur de conversion des coordonnées de chaque pixel dans le graphique d'informations sur l'erreur de conversion des coordonnées, sur la base des informations d'erreur de conversion des coordonnées reconstruites des pixels décodés, afin d'obtenir un résiduel de prédiction de l'erreur de conversion des coordonnées ; dans lequel, pour prédire l'erreur de conversion des coordonnées de chaque pixel dans le graphique d'informations sur l'erreur de conversion des coordonnées en se basant sur le graphique d'indicateur, les informations de profondeur et le graphique d'informations de résidu de projection, pour obtenir le résiduel de prédiction, le premier module de reconstruction (22) est configuré pour :

parcourir les pixels dans le graphique d'informations sur l'erreur de conversion des coordonnées selon un ordre de balayage spécifié, et identifier les pixels non vides décodés dans une zone adjacente à un pixel non vide courant en se basant sur le graphique d'informations indicateur ;

déterminer une relation concluant que deux pixels non vides décodés ont des erreurs de conversion des coordonnées similaires, s'ils possèdent des informations de profondeur similaires ; et déterminer une relation concluant que deux pixels non vides décodés ont des erreurs de conversion des coordonnées similaires, s'ils ont un résidu de projection similaire, les deux pixels non vides décodés ayant des informations de profondeur similaires et un résidu de projection similaire étant alors sélectionnés comme pixels de référence ; et estimer les informations d'erreur de conversion de coordonnées correspondant à un pixel courant sur la base de la relation entre les informations de profondeur et les informations d'erreur de conversion de coordonnées ainsi que de la relation entre les informations de résidu de projection et les informations d'erreur de conversion de coordonnées, afin d'obtenir une valeur estimée de l'erreur de conversion de coordonnées du pixel courant ; où la moyenne des informations d'erreur de conversion de coordonnées reconstruites des pixels de référence est calculée et utilisée comme valeur prédite, et les informations d'erreur de conversion de coordonnées du pixel courant sont reconstruites à partir de la valeur prédite et du résidu de prédiction obtenu par analyse.

9. L'appareil de décodage de nuage de points selon la revendication 8, dans lequel le second module de reconstruction (23) est configuré pour :

obtenir les informations d'erreur de conversion de coordonnées de chaque pixel non vide dans la structure du plan de projection bidimensionnel ; et obtenir la structure reconstituée du plan de projection bidimensionnel à partir des informations d'erreur de conversion de coordonnées.

| | |
|---|---|
| Acquire raw point cloud data | ∽ S1 |

↓

| | |
|---|---|
| Perform two-dimensional regularized plane projection on the raw point cloud data to obtain a two-dimensional projection plane structure | ∽ S2 |

↓

| | |
|---|---|
| Obtain one or more pieces of two-dimensional graphic information based on the two-dimensional projection plane structure | ∽ S3 |

↓

| | |
|---|---|
| Encode the one or more pieces of two-dimensional graphic information to obtain code stream information | ∽ S4 |

FIG. 1

FIG. 2

i

theta

0

phi

j

FIG. 3

Placeholder information graph

Input a coordinate conversion error information graph

Predict coordinate conversion errors of pixels

Quantize

Encode

Coordinate conversion error information bit stream

Depth information graph

Projection residual information graph

FIG. 4

FIG. 5

```
                        ┌──────────────┐
                        │    Start     │
                        └──────┬───────┘
                               │
                               ▼
                      ╱─────────────────╲                    Yes
                     ╱  Is a predication  ╲ ─────────────────────────┐
                     ╲    residual 0?     ╱                          │
                      ╲─────────┬─────────╱                          │
                               │ No                                 ▼
                               ▼                            ┌──────────────┐
                     ┌──────────────────┐                   │    Cnt++     │
                     │ Run-length       │                   └──────────────┘
                     │ encoding         │
                     └────────┬─────────┘
                              │
                              ▼
         Yes        ╱─────────────────╲
   ┌───────────────╱  Is the prediction ╲
   │               ╲    residual 1?     ╱
   │                ╲─────────┬─────────╱
   │                         │ No
   │                         ▼
   │     Yes       ╱─────────────────╲
   │ ┌────────────╱  Is the prediction ╲
   │ │            ╲    residual 2?     ╱
   │ │             ╲─────────┬─────────╱
   │ │                      │ No
   ▼ ▼                      ▼
┌──────────────┐   ┌──────────────────┐
│ Sign bit     │   │ Decrease the     │
│ encoding     │   │ prediction       │
│              │   │ residual by 3    │
└──────────────┘   └────────┬─────────┘
                            │
                            ▼
                   ┌──────────────────┐
                   │ Design a context │
                   │ model            │
                   └────────┬─────────┘
                            │
                            ▼
              No  ╱─────────────────────╲
          ┌─────╱   Is the prediction    ╲
          │     ╲ residual greater than a ╱
          │     ╲  specified threshold?  ╱
          │      ╲─────────┬────────────╱
          │               │ Yes
          │               ▼
          │      ┌──────────────────┐
          │      │ Exponential-     │
          │      │ Golomb coding    │
          │      └────────┬─────────┘
          └───────────────┤
                          ▼
                  ┌──────────────┐
                  │     End      │
                  └──────────────┘
```

FIG. 6

```
┌─────────────────────────┐
│  First data acquisition │ ⌒11
│         module          │
└─────────────────────────┘
            │
            ▼
┌─────────────────────────┐
│    Projection module    │ ⌒12
└─────────────────────────┘
            │
            ▼
┌─────────────────────────┐
│     Data processing     │ ⌒13
│         module          │
└─────────────────────────┘
            │
            ▼
┌─────────────────────────┐
│     Encoding module     │ ⌒14
└─────────────────────────┘
```

FIG. 7

```
┌──────────────────────────────────────────────────┐
│ Acquire and decode bit stream information to obtain│ ⌒ Step 1
│                  parsed data                       │
└──────────────────────────────────────────────────┘
                        │
                        ▼
┌──────────────────────────────────────────────────┐
│ Reconstruct one or more pieces of two-dimensional  │ ⌒ Step 2
│  graphic information based on the parsed data       │
└──────────────────────────────────────────────────┘
                        │
                        ▼
┌──────────────────────────────────────────────────┐
│  Obtain a two-dimensional projection plane structure│ ⌒ Step 3
│  based on the one or more pieces of two-dimensional │
│               graphic information                   │
└──────────────────────────────────────────────────┘
                        │
                        ▼
┌──────────────────────────────────────────────────┐
│ Reconstruct a point cloud by using the two-dimensional│ ⌒ Step 4
│          projection plane structure                 │
└──────────────────────────────────────────────────┘
```

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110708529 B

**Non-patent literature cited in the description**

- Dynamic Point Cloud Geometry Compression via Patch-wise Polynomial Fitting. **XU YINGZHAN et al.** ICASSP 2019 - 2019 IEEE INTERNATIONAL CONFERENCE ON ACOUSTICS, SPEECH AND SIGNAL PROCESSING (ICASSP). IEEE, 12 May 2019, 2287-2291